# EUROPEAN PATENT APPLICATION

(11) **EP 1 148 426 A1**
(43) Date of publication of application: **24.10.2001**
(21) Application number: 00108378.1
(22) Date of filing: 17.04.2000
(51) Int. Cl.: G06F 17/30

(54) **A method for constructing objects in a computing environment**

(71) Applicant: Gladitz, Wilhelm, 10997 Berlin (DE); Elul, Erez, 53586 Givataim (IL)
(72) Inventor: Elul, Erez, 53586 Isael (IL)
(74) Representative: Dendorfer, Claus, Dr.

(57) **Abstract**

A method to construct generically insertable connective objects in computing environments, allowing identification, connection and re-definition of defined and undefined, according to set theory, yet characterized objects and providing a new type of self - connected objects in a new type of manipulation space, together with a system of mutually attributive systems of constructing and connecting these objects, so that the system, its constructed systems, scopes of connections and objects all share the same space lifetime. The constructing core of the invention is a simple method of only 15 instructions, using a technique of numerical calculation of a number for addressing its objects, together with part of an information external to the addressing as a property of the addressed object, linked by a new type of pointer. The invention provides a new approach for building structures of objects, useful for generic knowledge systems and interactive or automatic language processing and other such applications. The invention generally provides a method to develop tools to adapt to the logic of existing users versus the common user.

## Description

### BACKGROUND OF THE INVENTION

The present invention relates generally to computing systems and particularly to connecting and to constructing, including addressing and creating, of objects in computing systems. The invention addresses the following two central issues of computing:
· the relation of the computer and its software to the user
· the way the computer and its software can fulfill the tasks of the user.

Prior art is limited in both issues by requiring pre-definition of the satisfaction of the task fulfilled by the operation and pre-definition of the initialization of the operation. These predefinitions would either require a pre-defined human user (as the pre-defined statistical 'common user') or lead to problems in serving the existing human users. Since prior art can principally deal only with the predefined 'common user', it requires the many specific existing users to adapt to this basically inflexible model. This generates many problems familiar to computer users today. It is the object of the invention to provide a method usable to develop software that can indeed adapt itself to the logic of the existing users.

The second, closely related issue refers to fulfilling the tasks of the existing user, or as it is commonly called, the 'intelligence' of computer software. As will be demonstrated, this issue is closely related to insertion. It is the object of the invention to provide a method to increase the level of insertion beyond prior art and so to facilitate a higher degree of so called 'computing intelligence' than before.

### Inclusion and Connection

Prior art methods of constructing or connecting objects is of "object oriented method" or generally of methods derived from the mathematical "traditional theory of sets". Based on both, prior art methods constructing or connecting are designed globally the same by scopes, inclusion and identifiers, so that the addressing of the constructing is just a result of determination belonging to the outside of the addressed object. The prior art determinates itself by inclusion. Based on inclusion, this art concludes connections, corresponding to the "traditional theory of sets", wherein the connection is characterized just by the inclusion, so elements are connected together with each other, if and only if, they are included together in a set. Inclusion, however, is a specific conditioning case of connection. Characterization of inclusion by connection versus the reverse (as is done by the Theory of Sets), is made here, when the included is the connected, which is conditioned by the including, thus the connected which is not conditioned is not included, but still connected. By this characterization, prior to condition there is always connection, because being included is a specification of being connected. Here we can conclude: all of inclusion does not include all of connection, but all of connection connects all of inclusion.

Suppose 'A' is an element in a set 'B', then 'A', which is included in 'B', does not include 'B'. But suppose 'A' and 'B' are connected, then 'A', which is connected to 'B', connects 'B'. In the first, unilateral case, 'A' and 'B' are conditioned unilaterally, because when 'A' is included in 'B', then the reverse statement " 'B' is included in 'A' " is false, and because when 'B' does not exist and 'A' is included in 'B', then also 'A' does not exist. In the second, mutual case, both statements " 'A' is connected to 'B' " and " 'B' is connected to 'A' ", are true and when 'B' does not exist and 'A' is connected to 'B', then 'A' can exist.

'Mutual' and 'unilateral' operations are distinguished here so, that in a 'mutual' operation exchanging the operands does not necessarily change the logic value of the result, while exchanging the operands in a 'unilateral' operation necessarily changes the logic value of the result.

Suppose 'A' and 'B' are positive integers, and 'A' does not equal 'B', then the statement " 'A' plus 'B' equals 'B' plus 'A' " is true, but the statement " 'A' minus 'B' equals 'B' minus 'A' " is false, thus plus is a 'mutual' operation and minus is a 'unilateral' operation.
The 'traditional theory of sets' is considered here also an hierarchical system of connecting and naming, since the theory connects one set to several elements, all being equivalent to an hierarchical layer.

By those distinctions the main limitation of the "traditional theory of sets" appears as the limitation of 'unilateral' versus 'mutual', when in this theory being included is just a unilateral specification of being connected. The following specifies these limitations:

### Lifetime and bypassing

Prior art restricts the connection just to the condition of inclusion, thus hides all the connections prior to conditions. This hidden part of the connection is well demonstrated also in the fundamental problem of hierarchical structures, structured by unilateral conditioning. While in a structure of two-dimensional points, 'A' and 'C' can be connected by going through point 'B', or directly, bypassing 'B', in hierarchical structures bypassing 'B' is ill defined, when 'A' conditions 'B', and 'B' conditions 'C'. In prior art, this is partially solved by additional pointers ('shortcuts'). Those pointers do not have the property of what they point to and are not globally available.

Lifetime provides access when access enables referring. Without referring ability an object is ill defined, otherwise it is valid. The lifetime providing access of prior art objects is defined by their scopes, therefore bypassing scopes of objects is ill defined. Although construction of paths of layers of conditions of inclusion, or of layers of characterizations is available, prior art hierarchical systems are still should be required to be globally accessed. Global access of all objects of an hierarchical system requires bypassing its layers, yet the layers of the hierarchical systems of prior art are in different scopes having different lifetimes. Only when all scopes of the system have the same lifetime, then the system can enable referring of all of its objects, and only then bypassing of all the objects is available. This is what the invention provides. Since it conditions by connections, not only by inclusion, and also prior to inclusion, it defines scopes of connections and scopes connected or not connected to other scopes having the same lifetime. It connects and identifies and creates within and between all scopes of the entire system, since all scopes have the lifetime of the system.

### Insertion level

As long as an operation is initiated outside of itself or fulfilling its task to the satisfaction which is outside of itself, the well defined distinction of the operation, based just and only on the distinction made up by inclusion, can be made only, when that 'outside-of-itself' is predefined. That is why prior art requires predefinition of the satisfaction of the task fulfilled by the operation and predefinition of the initialization of the operation. These predefinitions would either require a predefined human user (as the predefined statistical 'common user') or lead to problems in serving the existing human users.

The quality of the hierarchical form of addressing to distinguish the specification from the generalization of the addressing with the quality of the dimensional form to unify those, are used to limit the pre-definition problems. This limitation of the predefinition problems being related to all of the possible objects being uniquely identified, is measured here, when a dimensional form in its scale of unique identifiers uniquely identifies all the possible objects being identified also by an hierarchical form sharing the same lifetime of the dimensional form, and when the same lifetime enables bypassing, then the ratio of the smallest scale of any layer of the hierarchical form to the scale of the dimensional form, is equal to the 'level' of the insertion.

The insertion is measured by this level as an insertion of any possible object to be an 'outside-of-itself' intended to be inserted into the layer of the object. This level corresponds to the one lifetime of the range of possibilities being the specification distinguished from the generalization. The higher this 'insertion level' is, the less the 'outside-of-itself' is required to be predefined. This 'insertion level' can be applied also to operations in a system.

Although prior art provides solutions by constructing specification and generalization of addressing in a form of a pointer to be distinguished or unified by lifetimes of scopes, its maximum insertion level is always one, such as in the standard notation for an address in the 'RAM', which takes the form 'segment:offset', when the 'segment' and the 'offset' having different lifetimes, or in the hierarchical form of 'directories' addressed also by unique dimensional form of addressing in the 'hard disk', when both forms of addressing designing the form of the 'hard disk' share the same lifetime.

The invention constructing addresses uses the numerical base technique, simply because this technique applies a referring system (in hierarchical form) to a number (in dimensional form), for achieving one lifetime in both hierarchical and dimensional forms, with the prior art maximum insertion level one as the invention minimum, and a predefined maximum. The height of the level of the insertion is determined by the number of the digits corresponding to the number of the invention pointers, constructing a path to the invention object, instead of just one such digit used in the prior art. The digits are of an equivalent number being an addressed object property, when the used digits in their locations of numbers construct the invention object addresses and the unused digits construct the invention 'defined void' addresses. Both the used and the unused digits providing the 'outside-of-itself defined by the insertion level being the 'defined void' addresses, intended to be inserted as object addresses.

### Number of objects and inclusion of domain

In prior art, when a domain includes another, both being domains of objects having identical size, the included has less objects then the including domain, whereas in this invention a domain including another has not just objects but also potential objects ('defined voids'), so that the included domain (in hierarchical layer form) defines 'insertion level number' times more objects and potential objects than its including domain (in dimensional form ) does. Furthermore, prior art distinguishes absolutely between the address of the object and the object itself, corresponding to the base of inclusion of the 'traditional theory of sets', thus the pointer has only the address property and not the property of the data which it points to, so prior art does not, as the invention does, have an external domain belonging to the addressed object determining the addressing specification of the object in both the included and the including domains.

### Domains and using dependency and independency of identifiers

Prior art unifies laws of orders determined by sizes of ranges to be equal or smaller than the including ranges, activated in scopes defining lifetime of their objects, so that the object shall be uniquely identified for being accessed, so when the objects have one common lifetime, the insertion level is smaller than one.

The invention constructs two equivalent types of laws of order: the global order in the including domain constructed by a global unique identifier, and the scopal order constructed by two different types of scopal identifiers: the 'outer identifier', defining the included domain and the 'inner identifier', identifying in the included domain. Any of the three identifiers independently constructs a domain of objects, while only the equivalences of the three construct an object address. The domains of objects refer to totalities which can, but don't have to, be identical or connected and all the invention laws of order, identifiers, objects and connections share the same lifetime.

### Dimensional form, hierarchical form and the beginning of a form

Prior art distinguishes between dimensional and hierarchical forms of addresses, whereas this invention unifies dimensional with different, yet coexisting, hierarchical forms of addresses, so any object attributed by several addresses is 'crossed' by the forms of these addresses. The invention first replaces 'inclusion' with 'crossing' for relating forms constructing objects. The invention then can separately set precedence(s) between the crossing forms, after which any such precedence corresponds to a form of inclusion of forms defining its beginning. Thus the invention enables methods to set the beginning of their forms corresponding to all the invention objects together with their input/output forms, such as the beginning of the form being the data scope form starting in an invention object, and in the data scope the beginning of the form set as invention object being input or output forms, or being ownership, or being identical combination of figures upon their locations etc.

### Objects and connective objects

Prior art distinguishes between objects and connection of objects, in the limitation of the forms of the objects. 'Connective object' here defines an object which is a connection of objects sharing the same lifetime of the object itself. When a one-dimensional object is not used as a connection of objects, but is connected with other such objects in a more than one-dimensional address, then this dimensional address is a connection of one-dimensional objects having the same lifetime, so the dimensional address is a 'connective object' and the one-dimensional objects are not 'connective objects'. In hierarchical form the objects, which are not the object of the beginning of the form, are also connection themselves, and if sharing the same lifetime, are also 'connective objects'. The invention object is a connection of objects and all the invention laws of order, identifiers, objects and connections share the same lifetime, thus the invention objects all are 'connective objects'.

### Variety of connections

The number of different types of connections of 'connective objects' is defined here by the minimum equivalent number of different or separate forms of inclusion required to include these objects. This number corresponds to the variety of connections crossing a 'connective object'. Since prior art determines itself by inclusion, and since lifetime is restricted there to a scope, this number in prior art is always one, whereas in the invention this number is constructed for two different types of connections: for one dimensional type this number equals one, and for the other types the minimum of this number equals two, as described above. Together with the height of the insertion level applied to the invention variety of connections, the invention 'connective object' is crossed by mutual forms of addresses versus the prior art unilateral forms of addresses.

### Limitation of insertion

General attributes such as 'logic value' (true/false), decision, activity and data as they are defined in prior art are 'connective objects'. Generally, insertion is limited to the insertion level of the 'connective objects' available in one lifetime, and also by less variety and more fixed precedence of the connections of these 'connective objects'.
Additionally, insertion is limited by inclusion applied to such general attributes, when the including conditions the included, then the precedence already defined necessarily determines precedence of the applied general attributes such as 'logic value' prior to decision prior to activity prior to data, and when the objects connected to these 'connective objects' being the general attributes set in such a predefined precedence, then this predefined precedence applies also to precedence of the connection of these connected objects.

Prior art insertion is limited to an insertion level maximum of one, a lifetime restricted to a scope, inclusion unifying connections having fixed variety and definition generally tied to the described above additional inclusion limitations of insertion. Prior art insertion can be improved by the methods enabled by the invention setting precedence and still having their 'connective objects' share one lifetime, when the insertion level of the 'connective objects' expanded from minimum of one and the connections having more variety than inclusion provide when the connections disunify and unify inclusion so the 'connective objects' are crossed by mutual forms of connections.

### Space of 'Connective Objects' and Manipulation

When 'connective objects' manipulation includes their creation, removal or insertion, then the space of 'connective objects' is where 'connective objects' manipulation is available. Definition of this space, then, is a condition for defining 'connective objects', in a relation to their manipulation and connection potential. Since any object of the present invention being a 'connective object' is uniquely identified by a one-dimensional integer, an existing manipulation argument in the invention space is an integer applicable to all of the invention space 'connective objects' being generically open to manipulation. This invention space is designed for high level generic manipulation being generically the next orders of activities space, when the insertion is redefined as the 'next order of activities' by and as a scale of insertion into interrupted continuous activity being the previous order, when the first order as continuous activity is an order empty of activities, and when every insertion interrupting continuous activity creates the next (a new higher) order.

Prior art limits insertion also by permanently distinguishing between identities and between 'logic values' of connections of identities and the identities themselves and also between different scales of their next order of activities such as data next to executing next to logic values like program variables in either linear or non-linear (considered as hierarchical) paths.

### Talking Spaces

The invention enables methods managing spaces of 'connective objects' open to manipulation at high levels, when these spaces are to be communicated by fixed objects and the argument is an integer of their 'connective objects' or is one or more paths or scopes of 'connective objects' of the manipulation in the spaces.

### SUMMARY OF THE INVENTION

An object of the invention is to allow connecting and constructing in new varieties.

The invention comprises the features of the independent claims. Preferred embodiments of the invention are defined in the dependent claims.

The main method of the invention of constructing and connecting preferably uses two one-dimensional scales, one several times bigger than or equals the other, the smaller being of identifiers each identifying an object of all the objects constructed by the invention methods, and the bigger being of identifiers each identifying the object of one layer type of objects related to an object identified by the identifier of the smaller, and simultaneously each being one of several equivalencies to an identifier of the identifiers of the smaller optionally relating another layer type of objects having identical equivalence. The object so constructed belongs to two types of layers, crossing each other and each belonging to an independent hierarchical form. The resulting system is called here a 'system of mutually attributive hierarchical systems of constructing and connecting'. The invention thus allows accessing either directly through the one-dimensional identifier (of the smaller scale) or by hierarchically characterizing successively layer after layer in each hierarchical form independently, or in any involving stepping combination thereof, including constructing other such hierarchical forms by the performing the above. The invention connections are liberated from being exclusively tied to the inclusion form, wherein the including conditions the included, thus connections prior to conditions are hidden. The invention methods thus performs bypassing and insertion of invention connections at higher than prior art levels, corresponding to the quality of predefinition required for a system (thus more bypassing and higher level of insertion are equivalent to less predefinition being required), and thus allows automation of connections with less predefined conditions than in 'Object Oriented' data construction or in similar prior art computing based on the 'Traditional Theory of Sets'.

The method of the invention preferably constructs its forms of connection by at least two equivalent types of laws of order: the global order in an including domain constructed by a global unique identifier, and the scopal order constructed by two different types of scopal identifiers: the outer identifier, defining the included domain by being equivalent to a global unique identifier of an object and the inner identifier, identifying in the included domain. Any of the three identifiers independently constructs a domain of objects, while only the equivalencies of the three construct an object address. The domains of objects refer to totalities which can, but don't have to, be identical or connected, and all the invention laws of order, identifiers, objects and connections share the same lifetime.

The method of the invention of constructing addresses preferably uses the numerical base technique, simply because this technique applies a referring system (in hierarchical form) to a number (in dimensional form ), for achieving one lifetime in both hierarchical and dimensional forms with the insertion level minimum of one and a predefined maximum. It constructs a structure of related objects, when the global unique identifier is an object address in this structure, the outer identifier relates objects to a 'folder object', which has a global unique identifier equivalent to the outer identifier of the related objects, the inner identifier is an address of an object related by the outer identifier, and the connection from the 'folder object' to the inner identifier addressed object is equivalent to a path of several pointers ('Combinative Pointers'), each pointing to a range of addressed objects, and when the size of this range is equivalent to a defined numerical base, and any pointer step in this path is equivalent to a digit location in the number equivalent to the inner identifier of one or more pointed objects, and the pointer points to the equivalent of the global unique identifier number less the digit in its location of the inner identifier equivalent number of the address objects.

The inner identifier is a self-addressing attribute considered as belonging to the object, thus an object, which does not have this identifier or the outer identifier, can not be constructed as a new object. The used digits in their locations of the numbers, which are equivalent to the inner identifiers, construct the invention object addresses and the unused digits construct the invention 'defined void' addresses. Both the used and the unused digits, defined by the insertion level, providing the 'outside-of-itself' being the 'defined void' addresses being intended to be inserted as object addresses. The objects are of new type (either 'Pile Objects' or 'Pile Objects Gates').

In the following, some required definitions of the invention are given:
· All the invention objects are always connected and are always connection themselves.
· Access is defined by one or more identifiers or attributes, to issue or to terminate or to prepare one or more 'defined voids' or objects.
· Scope is defined by one or more connections or layers of connections made by one or more accesses.
· Objects in a different scope are independent and are in-activities, otherwise the objects are activities.
· Scope is initiated and finalized by activities.
· A 'thing' being one or more 'defined voids' or objects is an activity.
· A 'thing' has the quality of being prepared by its scope, either to be uniquely identified as an the invention object, or to be not uniquely identified as a scope, therefore the invention object in its scope is a 'thing', otherwise is a 'void thing', and the scope itself is either a 'thing' or a 'void thing'.
· The scope as activity gives all of its 'things' the quality to become objects.
· The constructed object is a 'connective object' having at least the above connective properties.
· Global access of all of the above forms and their parts is provided.
· The lifetime of any invention object is the lifetime of the system of all the invention objects.
· Insertion is enabled as the 'next order of activities' defined by and as a scale of insertion into interrupted continuous activity being the previous order, when the first order as continuous activity is an order empty of activities, and when every insertion interrupting continuous activity creates the next new higher order, when any order is a connection which enables unique identification of all of its objects, when any continuous activity is a method of accessing said object/s of said order, and when interrupting said continuous activity is a method/s of accessing other than said object/s.
· Since any object of the invention is a 'connective object' and is uniquely identified by a one-dimensional attribute, an existing manipulation argument in the invention forms is a single attribute applicable to all of the invention 'connective objects' and of forms setting 'connective objects', thus the manipulation is generic, easy and available at high levels.

It is an object of the invention to construct generically insertable 'connective objects'. The invention represents a very basic change in data processing compared to prior art, by enabling new and unique tools and techniques of identification and connection.

The invention enables the following tools and techniques:
· Invention objects (**'Pile Objects'**) that are always uniquely identified, connected and are also a connection themselves and in addition by default (when evaluation precedes access) any invention object can evaluate any other invention objects including itself.
· Invention 'Things' (**'Pile Things'**) that have the potential to be identified either uniquely by their scopes as objects or not uniquely as scopes.
· Invention 'Void Things' (**'Void Pile Things'**) that are out of their scopes yet are defined (in contrast to 'void objects' which are undefined).
· Invention **'In-Betweens'** which are invention 'Things' made out of objects and objects made out of the invention 'Things', when 'Void Things' are defined so they can be referenced. (Through the invention methods any undefined 'thing' or anything undefined is treated as potentially scopally defined and inter-scopally being redefined as or defining one or more scopes, and still not to have duplicates. The invention thus is able to generate data from 'voids')
· Invention **'forming as and like'**, that is processing data and the 'In-Betweens' of data thus making processes of things, also due to bypassing one or more 'path's constructing one or more 'thing's, as and like data available also for feedback as data (in order to identify, compare, make and/or characterize previously undefined objects).
· Invention **'validating a scope'** by replacing the need to define by having unique identifier with the ability to characterize by identifying connected paths. (the ability to be defined, as it is in the range of all which is resulted by the invention methods, moves in the rage of the ability to define by using operations using the provided forms of connections resulting characterization or definition in one or more scopes, to the defined result corresponds to the resulting of unique identifiers of one or more objects or 'void addresses'.)
· Invention **'redefining tools' -** the power to redefine by the user or by automatic processes (or, in other words, when the definition is limiting the application, the invention methods can propose tools for redefining the definition).
· Invention **'naming' -** use of the distinction and connection to 'name' or of the 'name' to distinct or connect.

The invention allows to:
· generically prepare known 'Things' (objects, uses, applications, orders, rules, connections etc.) for unknown 'Things' (objects, uses, applications, orders, rules, connections etc.) and still have two independent generic indexes for all. (Dual Independent and Generic Indexing);
· make new (additional) independent scopal indexes. (Additional Scopal Indexing);
· extend the scopal connection effect to the lifetime of the invention object and things (Inter-scopality);
· automatically construct generic data as activity of indexing (making 'Things'). 'Generic' here means the ability of the 'Things' not to be in one scope and still to be in another scope and in addition to be inter-scopally compared. (Generic Automatic Activities)
· apply operations (generically) in and by the entire invention methods due to scopal and generic indexes. (Generic Building Activities)
· reverse the task operations due to generic reversibility of connections within a scope. Since an order of operations (described by a 'path') produces result(s) of a task and since the scope has lifetime beyond its validity so it can be activity as a 'Thing', the operations can also be described by bypassing the 'path'. (Reversibility)
· generically create predefined orders for special use and redefine those orders and still keep scopes for the different definitions of those orders for anything that is active in any scope. (Generic Meta-Order)
· combine this ability with the human ability to define usefulness so useful things can be indexed automatically. (Open Knowledge Management)
· evaluate things by flexible logic since all the invention 'Things' can evaluate any other invention 'Thing'. Evaluation by logic requires systematic identification through connection (systematic as being able to apply to all of the 'Things'/objects of the connection) for true (as object is there/'Thing' is not void) or false (as object is not there/'Thing 'is void) states. The changing of true or false or of logic evaluation characterizes the flexibility of the logic. (Flexible Logic)
· feed back any parts of the computing process. Since order, operation, task and result can each be treated as an invention 'Thing', each, as well as all other invention 'Things', can be fed back to the process partly or entirely. (Generic Feedback)
· feed back on basis of history of the computing process by keeping the operations of a task identified by the invention as a history and then continuing from any part of the history with available bypassing, thus making (new) operations on the history base. (Generic Historic Feedback )

The invention furthermore can improve performance of operations (compared to prior art) due to its following characteristics:
· Since data constructed by the invention methods ('Pile data') is constructed by conjunction of indexes, 'Pile data' construction depends on the use of the 'Pile' (such as similarities of figures upon location, 'naming', 'forming as and like', etc.).
· Although a specific invention object ('Pile Object') in the preferred embodiment of the invention always has a constant size of 32 bytes, of which only 8 bytes are needed for unique identification (compared with traditional objects which have variable sizes and only scopal identification), and although a 'Pile Object; is indexed by more 'Pile Objects', data is still compressed since every 'Pile Object' is uniquely identified and appears only once represent in the data scope a combination of figures upon their locations.
· Since 'Pile Objects' build a sequence (of their unique identifiers), the full sequence (when each next unique identifier is increased by one) takes four times less capacity than is mentioned above and is as fast as the prior art processing of blocks of data.
· Any use of a 'Pile Object' increases the appearance value of its sequence and thus the invention 'Pile Cache' (ordered by appearance value). Since the 'Pile Cache' reflects always the invention use in the specific terms of the use of the 'Pile Objects' (most used objects closer, less used ones further away), performance is highly effective in comparison to prior art.
· In comparison to prior art full sequence data processing, the invention will seem to be 64 times slower, because its single operation (except in a full sequence) consists of several comparable prior art operations. However, the invention will generally be faster in identification processes because it requires (usually) less steps of operation to identify.

Because of the generic quality of connections due to the invention methods, connection values, being values which are effected just because of the connection itself, can be applied generically. Among this type of value the following are available:
· values of measuring distance of layers and of forms between objects;
· values of measuring amount of objects connected 'down' by all the layer in a specific hierarchical form to the object;
· values of characterizing a continuum of accessing objects due to their separation which also characterizes the objects themselves, such as the number of the separation in the continuum, the turnings and the number of turning from or to the continuum or other such continuum by or as next order of such continuums activities, etc.

In addition there are three types of parameters available at any step, for considering any next possible step of the invention methods:
· **'static parameters'** for considering all the system for any time such as 'density' when 100% represents the full sequence of pile objects;
· **'dynamic parameters'** for considering the actual activities of the system such as the amount of appearance considering the actual use of a sequence of 'Pile Objects';
· **'individual parameters'** for considering specific connections to the object that is to be evaluated by those such as in the default case wherein any object can be evaluated by all of the invention's objects as if they were plug-ins to that object.

The invention by these tools and their performance opens new possibilities for applications in all fields, where data and naming applied by machines, or by humans interacting with machines, are processed. Here are some examples of how the invention can improve applications in such fields:

### Data Bases, Data Mining, Search Engines

The invention offers various methods of access by all its tools as well as the conditions of 'Pile Things' and their consequences due to the 'Combinative Pointer'. The invention is already a generic search engine in a sense of being able so search for any type of data and to apply feedback to itself. Search engines pre-process input by predefined index/es in order to find a scope of objects as an output. The invention can read this output as a 'Pile Thing' and process reactions of search engines by automatically processing input, redefining the predefined input and outputting 'Things' as objects. This gives invention enabled search engines the combined capabilities of a search engine and an agent to construct specific data in the invention space.

### Data Analysis

In many cases large amounts of partly defined or even undefined data have to be analyzed. The invention makes all or part of its 'Things' and objects available as analyzing tools, but some (Flexible Logic, Generic Feedback and Generic Historic Feedback) are especially effective. The system parameter tools and the connection value tools) allow furthermore to construct reasons for the next step that will fit the specific use of the system beyond the given systematic reasoning.

### Knowledge Systems

Since 'Knowledge System' is only loosely defined in prior art, the invention considers it to be a system that allows to predict a possibility of connection, when learning evaluates the prediction against results, which can be tested by that knowledge, so the next prediction can be changed. Prediction then (even wrong), without such learning or learning without prediction, or no learning and no prediction, all qualify 'void knowledge'. Context considered as relevant to the predicted possibility of connection has the same quality as the knowledge and is all the connections involved with predicting that possibility. Software systems qualify as Knowledge Systems only when they are both: knowledge and learning systems, thus being able to test the results against their predictions and to learn by evaluating the next prediction.

Any of the invention objects can be evaluated by all the invention objects, and any object can be the next step from an object. Moreover, this capability is generic and is also applied to the invention 'Things', so the range from 'Void Thing' to the entire invention can be considered as possible context for open knowledge management. Combined with the human abilities to define usefulness, an invention 'Open Knowledge Management System' can index useful things automatically.

### 'Creative Systems'

One of the central problems of 'Artificial Intelligence' computing is the consideration of context. The invention avoids the term 'intelligent' here, because in prior art this term appears to be based on inadequate models of human cognition and language. Instead, the invention uses the term 'creative' to indicate its capability to create things out of undefined, yet characterized things. In this terminology a system could be called 'creative' if it can consider other contexts than just the relevant ones, especially in cases where contexts are irrelevant and predictions are undefined and where more is required than just right predictions (as in knowledge and learning systems). Such a 'Creative System' must be able to predict right and wrong connections as well as contexts and apply right connections to the 'third things' which are the matching and the matching requirements. Such a system would act like a second order 'Knowledge System of Knowledge Systems':
· independently evaluating predictions
· context used by one is produced by the other.
· the 'third thing' in one is fed in as a result, while in the other the 'third thing' produces the right matching and is produced by it.

A 'Creative System' thus can be defined as being able to match contexts, predictions and the right 'third things',
· when the 'third things' are the matching and the matching requirements,
· when context can be a prediction,
· when wrong and right predictions are to be made, so it will consider others than just the relevant contexts.

'Creative System' and Knowledge Systems live in symbiosis, needing each other (i.e. context used by the creative system is produced by the knowledge system), but still being independent from each other (i.e. evaluating for different purposes, knowledge system for right connection, creative system for right 'third things'). A 'Creative System' creates right matches on the basis of being a knowledge system and at the same time being independent from that knowledge system. A 'Creative System' needs to be also a knowledge system by itself for evaluating the right 'third things', but should not just be a knowledge system by its own knowledge.

The invention allows for undefined objects as 'Void Things' and has many scopes to be integrated in its lifetime. Knowledge systems can be constructed by different scopes and 'third things', each of those will produce their own 'right things', predictions and contexts. But invention 'Things' in any range of scope/s still will be delivered at the cost of (min.) the unique identifier and (max.) a conjunction of some identifiers. Of course, Knowledge System and 'Creative System' each generate processes which are involving some lifetimes together and in between (i.e. evaluating the result against the predicted connection, creating/using context etc.). This is why a generic lifetime like in the invention is necessary. All that is needed for applications of the invention 'Pile Creative System' is for the user to define usefulness.

### Languages

The invention considers the environment of formal language as unifying the identification process, since formal language is unified by its form and can operate only in this form (order), and it considers the environment of natural language to consist of more than one single identification process. Since natural language needs to operate outside of its form, its environment is diverse and not unified. The invention furthermore considers form of identification process as order and treats formal language as (defining and defined by) data with identification processes and natural language as having (characterized by) data with identification processes, thus considering language in general to be defining and defined by or characterizing and characterized by any kind of data with identification processes.

The invention gives
· data analysis with the system parameter tools and the connection values tools, so providing tools to adapt forms (orders) to the special use/s
· knowledge system tools, so providing sensitivity of far/near contexts.

The combination of both gives sensitivity of far/near context adapted to the special use of the user. The combination of both with the invention 'Creative System tools' formally operates in and is operated upon more than one single unified forms (orders of identification processes), so it can produce together with the user language in a flexible identification process (which has order and also order of bypassing order).

The invention operates in both environments simultaneously, thus allowing new applications (as environments) that operate between formal and natural languages. Different users of applications based on the invention can produce different languages with the invention, which can still communicate amongst each other as well as with the different users. The invention as a 'Creative System' theoretically could even create meta-languages of its making different invention languages with different users, thus liberating the user from the current limitations to communicate with the computer through formal language.

### Internet Applications

One of the limiting conditions of today's Internet is the organization of data transfer as speed multiplied by volume. The invention solution in its preferred embodiment can replace quantity with quality and transfer all the invention 'Things' (data, applications, operations etc.) described above as parts or whole by 64 bit packages as minimum once definition is completed on both (or more) sides of the transaction. The volume needed is defined and redefined by the invention 'Things'. In prior art Internet computing some data about parts and wholes are kept locally or non-locally in cache in order to reduce transfer. Both local cache and Internet (server) cache have the same problem: they optimize the volume/speed ratio by identifying whole/part limited just to ownership/belonging issues. This limits also connection and increases the need for predefinitions of relations. Taken the size of the human workforce in comparison with the increase in volume and complexity of data, prior art Internet computing will reach natural limits quickly. Prior art like XML (an ISO standard derived internet standard) as a recent approach to address these problems achieves access to topics through relations and vice versa, thus does not determine more predefinitions of ownership/belonging relations, but of topic/relation still predefined by the author and with a fixed number (2 + number of dimensions involved in the topic map) of orders of activities. The invention can turn the Internet not only into a Knowledge System environment, but also into a 'Creative System' environment on the basis of 'difference' being the only communication standard needed.

### Operating Systems and Hardware Architecture

The future of the personal computer seems to lie in very small, inexpensive, portable and freely configurable envelopes which can be fitted with undefined yet (re-)definable plug-in devices and components corresponding to the invention 'Things'. Such devices could use invention custom chips that have their own cache and their own cycles for very primitive and fast operations which are coordinated with independent hardware for execution of the invention. Such a chip can also have a compiling plug-in optimizing the redefined 'Pile' within the invention chip.

The invention meets the conditions necessary for such an architecture:
· The core is very small.
· The variety and stability of the core functions is limited only by whatever the current standards define as maximum.

The above are conditions for easy manipulation by known/unknown users (not limited to the 'average common user' approach) and applications.

The above can be defined as a flexible open system to which can be added Knowledge-, Creative- and Language-Systems in such a way that any context connected to any data by those systems will be redefined as a flexible open context system. Together with the user and the uses this is what can be called a 'creative system environment'.

The invention is generically hardware-independent. Invention specialized (custom) hardware will, however, not only be cheaper, but can also provide better systematic approaches to multiprocessing. It has good potential to define, undefined and redefine objects, connections and things in next orders of activities.

### General Applications

Applications in general can gain new qualities through the invention. These qualities (as described above) by definition are invention generic. Because of re-definability as a generic quality of the invention, the performance will accelerate with use of the invention, especially when invention custom hardware becomes available.

### BRIEF DESCRIPTION OF THE DRAWINGS

Further features, objects and advantages of the invention will be apparent from the following detailed description of sample embodiments in connection with the appended drawings. The drawings show:

### Fig. 1:

The Combinative Pointer Mechanism.

Showing 8 sections (**A-H**) and 3 Domains:
**A** represents the integers form, wherein
   **Na** represents the 'insertion level'
   **Nb** represents the equivalent to the absolute value of the integer,
   **Nc** represents the 'upper standard level',
   **Nd** represents the 'insertion ordinal number'
   **Ne** represents the 'standard level'
**B** represents dimensional representation of **A**, with marking the direction of evolution of region of form of specific 'standard level'.
**C** represents Including domain, wherein
   **(e)** represent object specified by 'Ui'.
**D** represents Potential Pile Objects Gates Sequence.
**E** represents Potential Pile Objects Sequences
**F** represents Included domain , wherein
   **(b)** is Fan apex object and
   **(a)** is its 'Cp'.
**G** represents Specification Domain wherein
   **(a)** is 'Cp' of Pile Objects Gate,
   **(c)** represent Pile Object and
   **(d)** represents 'li'.'
**H** represents form of Pile Object or Pile Objects gate , wherein
   **(t)** represents 'Ui',
   **(x)** represents 'Oi',
   **(y)** represents 'li' and
   **(z)** represents 'Pc'.

Also contains explanation of the invention main drawing symbols in relation to 'traditional set theory' notation.

### Fig. 2:

The 15 'combine_object' instructions (Flowchart)

### DETAILED DESCRIPTION OF THE INVENTION

The invention is a method of constructing generically insertable and connective objects in the form of the invention objects, all related and each having at least the following four generic attributes: the first being the global unique identifier 'Ui', the second being the outer identifier 'Oi', the third being the inner identifier 'li', and the fourth being a value as the private characteristic 'PC'.

The following necessary equivalences are defined so, that
**'insertion ordinal number'** is an integer number in a range of zero to a predefined 'insertion level number',
**equivalent integer number of 'Ui'** is 'where', in a range of zero to a predefined 'maxUi', **equivalent integer number of 'li'** which is 'what',
and **equivalent integer number of 'Oi'** which is 'according',
are in a range of zero to ('maxUi' + 1 ) * 'insertion level number', equivalent to absolute value of such number equals said number - ('maxUi' + 1 ) * 'insertion ordinal number',
**'standard level'** is an integer in a range of zero to predefined 'upper standard level',
**'marker'** specified by 'standard level' is in a range of zero to 'maxUi' divided by 'upper standard level',
**the equivalent to the absolute value of an address** is the absolute value of said address integer equivalent, including domain equivalent to said structure, included domain equivalent to said hierarchical layer, and object domain equivalent to said 'what'.

The above equivalent integers are generally marked by two specifications: the left in the integer being equivalent to the 'insertion ordinal number', and the right in the integer being equivalent to the absolute value equivalent number, when the left specification in the absolute value equivalent number is equivalent to the 'standard level'.
'**Ui'** of any such object uniquely identifies the object in the structure of all said objects.
'**Oi**' of any such object relates the object to 'Ui' of an object named here 'folder object', when the absolute value equivalent of 'Oi' of the object equals the equivalent number of '**Ui**' of the 'folder object', and when the object together with the objects having the identical absolute value equivalent of 'Oi' constitute the hierarchical layer of objects related to the 'folder object'.
'li' of any such object uniquely identifies the object in the hierarchical layer defined by 'Oi' of the object.
**'Pc'** of any such object either being the **exclusive 'Ex'** of the object exclusively belongs to the object or being the **combinative pointer 'Cp'**.

With using the reverse technique to the technique of numerical calculation of a number, by its digits in their locations in said number and a predefined numerical base **'b'**, 'Cp' points to a 'general address' being equivalent to an address in said hierarchical layer, and to an address in said structure, so both addresses are addresses of the beginning of a range of pointed by said 'Pc' potential such objects, the size of said range equal to said numerical base 'b', and the new pointing of new 'Cp' points to 'general address' equivalent to a specific 'where' equal to said 'marker' specified by 'standard level', which, when said 'standard level' is odd, said 'marker' is previously decreased by 'b', otherwise said 'marker' is previously increased by 'b; when the connection from a 'folder object' having 'Cp' to one or more objects defined by their 'what' is constructed by a path of minimum of two such 'Cp', each defined by a step in said path, either when such object in said path having 'Cp' in the last said step being 'pile object', otherwise the object being 'pile objects gate', or when the object being the 'folder object' its 'Cp' being in the step prior to the first, when said step is equivalent to said location of said digit 'd' in 'what', when said 'general address' absolute value equivalence equals 'where' minus said digit 'd' of any said objects in said range, and when 'where' of the object of any step equals the 'Cp' of the previous step added to the 'd' of the current step.

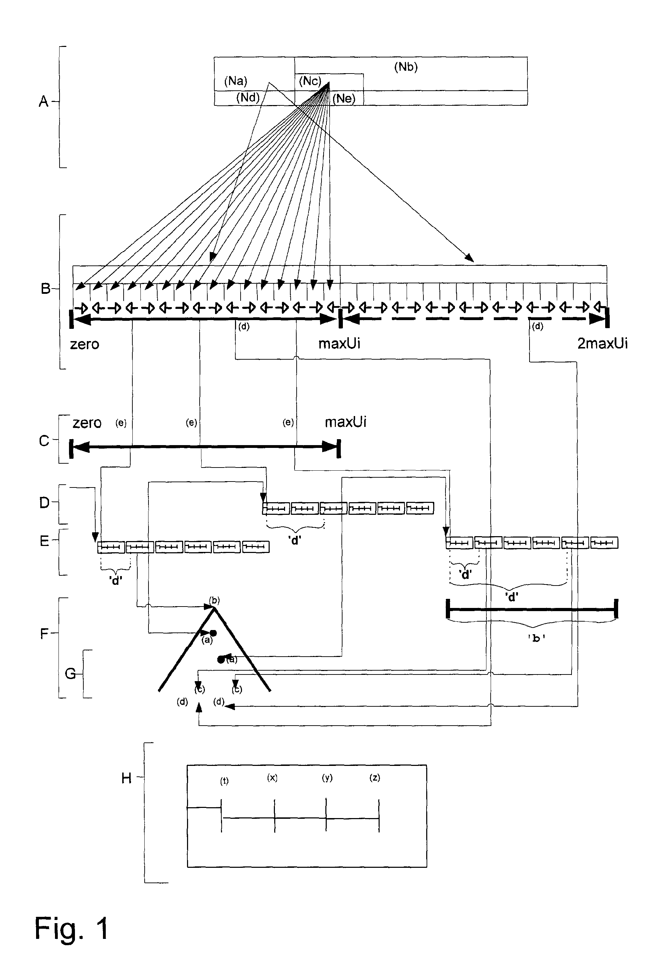

**'Fan apex'** is equivalent to 'folder object'.
**'Fan values'** are equivalent to the objects having the absolute value equivalent of 'Oi' equals 'where' of 'fan apex'. Fan connection is the connection of 'fan apex' and its 'fan values'. (fig. 1)
'**Mentioning connection**' constructed by a structure of objects in different hierarchical form than, yet coexisting with, the form constructing fan connections, so that an 'alternative folder object' has 'where' equal to the absolute value equivalent of the number equivalent to 'what' of objects being a layer of said different hierarchical form of said objects next to said 'alternative folder object'.
The **'insertion ordinal number'** of 'what' specifies precedence (see Claim 11).
The **'insertion ordinal number'** of 'Pc' specifies level of exclusivity of 'Pc' when equal to zero specifies 'Pc' as 'Cp'. The 'insertion ordinal number' of 'according' specifies level of termination, when equal to zero specifies no termination of the object and optionally in combination with higher 'insertion ordinal number' of an object in the same fan layer having the same 'what' of the object, the level of termination can specifies special operations required to precede.
The **'standard level'** specifies regions of forms wherein is the object, when equal to zero specifies fan connection, when equal to one specifies fan connection and mentioning connection, when bigger than one can be used also to define regions of forms functioning the same in several spaces equivalent to including domains, therefore enabling transmission of arguments of objects fixed in each and all said spaces, between said spaces.

The invention uses a mechanism combining initialization, two methods and the minimum required for definition of the space of the invention (described in the following 4 sections) to construct the invention objects in the invention space.

### (1) This section defines the system initialization of the invention:

This initialization is done first and only once in the system lifetime.
#value# here is used as an optional value.
Boolean here is an integer which equals either zero or one.
Constant here is an integer set just once in the system lifetime.
The symbols / and % here as two integer division operators
corresponding to the following:
if Y = quotient * X + remainder,
then quotient = Y / X and remainder = Y % X.
The X ^ Y operation here corresponding to X to the power of Y.
The X « Y operation here corresponding to X * (2 ^ Y ).
The X » Y operation here corresponding to X / ( 2 ^ Y).
The X »= Y operation here corresponding to X is set to X / ( 2 ^ Y).
The | X | operation here corresponding to the absolute value of X.
The X AND Y operation here corresponding to comparing bit after bit the X and Y bits and setting the bit result to one when both bits are one, otherwise setting the bit result to zero.
The X OR Y operation here corresponding to comparing bit after bit the X and Y bits and
setting the bit result to zero when both bits are zero, otherwise setting the bit result to one.
The X XOR Y operation here corresponding to comparing bit after bit the X and Y bits and setting the bit result to zero when both bits are equal, otherwise setting the bit result to one.
The structure object of elements using different exclusive storage memory place, thus object.element corresponding to the specific element of the structure object.
[X] here is used to indicate the member X of dimensional array, when [X][Y] indicates a two
dimensional member and so on, except of initializing this array with X been the total number of members in the dimension.
Integer 'Ui', thus 'Ui' is the unique identifier in the including domain.
Integer 'Oi', thus 'Ol' is the outer identifier defining the included domain.
Integer 'li', thus 'li' is the inner identifier in the included domain.
Integer 'Pc', thus 'Pc' is the private characteristic, used either as combinative pointer or as exclusive.
Integer 'I', thus 'I' is an integer used to mark the location of a digit in 'li' as a step. Constant 'L' equals #2#, thus the number of locations of digits is bigger than 1.
Constant 'q' equals #32#, thus 'q' is number of bits.
Constant 'b' equals ( 1 << 'q' ), thus the base 'b' equals 2 ^'q'.
Constant 'maxd' equals 'b' - 1, thus 'maxd' is the maximum possible digits in the location 'I'.
Constant 'insertion_level_bit_size' equals #1#.
Constant 'insertion_level' equals ( 1 << 'insertion_level_bit_size' ).
Constant 'upper_standard_level_bit_size' equals #1#.
Constant'upper_standard_level' equals ( 1 << 'upper_standard_level_bit_size').
Constant 'maxUi' equals ( 1 << ( 'q' * 'L' - 'insertion_level_bit_size' ) ) - 1,
thus the number of unique identifiers 'maxUi' equals ( ( 'b' ^ 'L' ) / 'insertion_level') - 1. Constant 'insertion_region_size' equals 'maxUi' + 1.
Constant 'mask_the_insertion' equals
( ('insertion_level' - 1) << 'q' * 'L' - 'insertion_level_bit_size' ).
Integer 'standard_level', thus when equals zero, then the 'what' is to be not mentionable and when equals zero, then the 'what' is to be mentionable.
Integer 'marker['upper_standard_level']', thus 'marker['standard_level']' is the specified 'marker' by 'standard_level', thus when ('standard level' AND 1) equals zero, then previously 'marker['standard_level']' is set to 'marker['standard_level']' + 'b', otherwise is set to 'marker['standard_level']' - 'b'.

**This method called here 'Differentiate_Integer'**
gets an integer and returns structure of
'insertion_ordinal_number' set to ( said integer AND 'mask_the_insertion' )
and 'absolute_integer' set to ( said integer>> 'insertion_level_bit_size' ).

**This method called here 'Inserting_Level'**
gets an integer smaller than 'insertion_region_size' and 'insertion_ordinal_number' bigger than zero and returns ( said integer OR ('insertion_region_size' «
'insertion_ordinal_number')).

**This method called here 'NEG_OF'**
gets an integer smaller than 'insertion_region_size'
and returns ( said integer OR 'insertion_region_size').

**This method called here 'A_bs'**
gets an integer and returns ( said integer >> 'insertion_level_bit_size'),
thus returning the absolute value of the integer it gets.
Integer 'what', thus 'what' is used for adjusting to the asked inner identifier.
Integer 'according', thus 'according' is used for adjusting to the asked outer identifier.
The structure object of elements equals 'Ob'
and includes the following:
integer 'where', thus 'Ob.where' is the object 'Ui',
integer 'what', thus 'Ob.what' is the object 'li',
integer 'according', thus 'Ob.according' is the object 'Oi',
and integer 'value', thus 'Ob.value' is the object 'Pc',
thus 'Ob' is the object, which sits on
a global traditional pointer pointing to
an 'Ob' which has 'Ob.where' equal 'Ui'.
( see also get_the_object_Ui )
Boolean 'apex_is', thus
when 'apex_is' equals one,
then 'current_is' is not checked, but 'Pc' and 'according' are considered to be set.
Boolean 'current_is', thus
when 'current_is' equals one,
then the current object 'Ui' equals 'according',
otherwise the current object 'Ui' does not equal 'according'.
Boolean 'is_old', thus
when the object was created,
then 'is_old' equals one,
otherwise 'is_old' equals zero.
Boolean 'to_create', thus
when 'to_create' equals one,
then a new object is to be created,
otherwise verification of 'is_old' is needed.

The following are some figures about the system in conjunction of number of objects and their use:
When 'I' equals 'L' or equals zero,
then the object is a pile object.
When 0 < 'I' < 'L',
then the object is a pile object gate.
When 'p' equals number of pile objects, and 'f' equals number of fans,
then 0 <= 'p' <= 'upper_bound' of 'p'.
The 'upper_bound' of 'p' dependent on
the 'p', which a fan has, and on the 'f', when
's_upper_bound' of 'p' <= 'upper_bound' of 'p' <= 'b_upper_bound' of 'p',
and when any fan has just one pile object, then
'upper_bound' of 'p' equals 's_upper_bound' of 'p' which
equals ( 'b' ^ 'L' ) / ( 'insertion_level' * 'b' * 'L' )
and when one fan has all pile objects, then
'upper_bound' of 'p' equals 'b_upper_bound' of 'p' which
equals ('b' ^ 'L' ) / 'insertion_level' - 1 - 'b' * 'L'.

**This method is called here 'basic_install':**
The specification of use of this method is:
The method is executed first, before the 'install_the_frame' method and only once in the system lifetime, for installing the requirement of the process of the method to build the objects in the space specified in the third section.
The process is described by the following two linear instructions:
The first instruction is:
'standard level' is set to zero.

The second instruction is:
when 'standard level' is smaller than 'upper_standard_level',
then 'marker[ 'standard level' ]' is set to
('standard level' + ('standard level' AND 1) )*(( 'maxUi'+ 1 ) «
'upper_standard_level_bit_size')
- ('standard level' AND 1 ),
'standard level' is set to 'standard level' + 1
and jump to the second instruction,
otherwise end this process.

### (2) This section defines the requirement of one-dimensional pointer and flag setting:

This method, which is called here 'get_the_object_Ui',
either sets a global traditional pointer of 'Ob' on the specific 'Ob' which has 'Ob.where' equals 'Ui' with setting 'is_old' to one,
or setting 'is_old' to zero and the traditional pointer of 'Ob' on the object position equal to 'Ui'
which the object shall have.
A linear access method using an one-dimensional array of the structure including 'Ob.what', 'Ob.according' and 'Ob.value', each taking ('q' * 'L' ) / 8 bytes, with the Boolean taking one bit 'Ob.old', initialized, before the 'install_the_frame' method and only once in the system lifetime, with setting to zero all the bits, and used when the member of said array is 'Ob.where' and 'is_old' is set to 'Ob.old' before evaluation of the condition ('Ob.old' equals zero AND 'to_create' equals one ) which if true sets 'Ob.old' to one, would satisfy the requirement of the method, although its performance would be poor, because of decreasing 'maxUi' approximately to ( maximum capacity of the media ) / ( ( ( 'q'*'L')/8)*3+0.125).
The reason of the specified poor performance is that can be high percentage of unused objects marked by 'Ob.old' equal zero in said array of said structure. Although said performance is still
useful for small ranges defined by 'upper_standard_level' and specified by 'standard_level'.
Ex: with 'insertion_level' = 2 and 'L' = 2 'q' = 16
the maximum capacity of the of RAM media is 'maxUi' * 12,
thus 'maxUi' = 21,333,333 at maximum capacity of the media = 256Mb + 2.6' Mb RAM. An alternative method using structure including 'Ob.where', 'Ob.what', 'Ob.according' and 'Ob.value', each taking ( 'q' * 'L' ) / 8 bytes, will not have all the objects defined in the range of zero to 'maxUi', but using Searching of the types: Linear Search , Binary Search , Search with a Binary Search Tree and Hashing or Sorting of the types: Insertion Sort, Mergesort, Quick Sort, or using the method specified by the C code given in the attached first appendix (appendix I). The attached second appendix (appendix II) contains the data structure definitions contained in the file "typ.h", which is included in the first lines of code of the first appendix.

### (3) This section defines the process of the method to build the objects in the space:

This method called here 'combine_object', is the process of the 'combinative pointer':
The specification of use of said method is:
The method sets the unique identifier 'Ui' by two identifiers: the 'Oi' and the 'li', when 'Oi' is given by 'according' and when 'li' is given by 'what'. It uses said 'get_the_object_Ui' method and it gets either 'current_is' equals zero and 'according' and 'what' and 'to_create', or 'current_is' equals one and 'what' and 'to_create'. When it 'gets to_create' equals one it also gets 'standard_level' and creates new object, thus when the object is not mentionable then 'standard_level' equals zero, when the object is mentionable then 'standard_level' equals one .

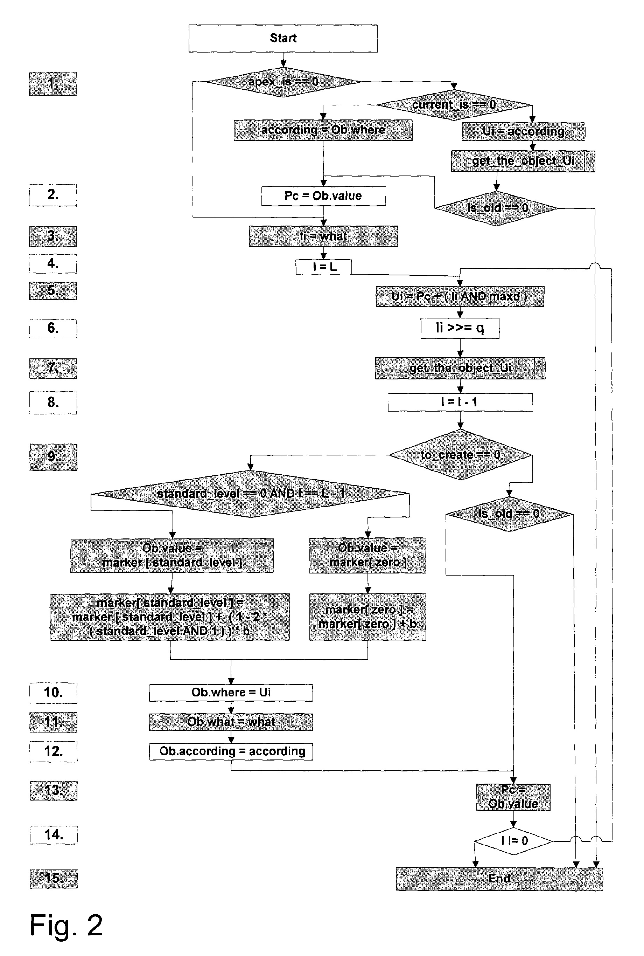

This process is defined by the following fifteen linear instructions ( Fig. 2 ):

The first instruction is:
when 'apex_is' does not equal zero, then jump to the third instruction is
otherwise when 'current_is' equals zero,
then 'Ui' is set to 'according',
'get_the_object_Ui'
and when 'is_old' equals zero,
then jump to the fifteenth instruction,
and when 'current_is' does not equal zero,
then 'according' is set to 'Ob.where'.
The second instruction is:
'Pc' is set to 'Ob.value'.

The third instruction is:
'li' is set to 'what'.

The fourth instruction is:
and 'I' is set to 'L'.

The fifth instruction is:
'Ui' is set to 'Pc' + ( 'li' AND 'maxd' ),
thus 'Ii' AND 'maxd' is set to the last digit of 'Ii'.

The sixth instruction is:
'Ii' >>= 'q',
thus 'li' is set to 'li' / 'b' prepares for the next last digit .

The seventh instruction is:
'get_the_object_Ui'.

The eighth instruction is:
'I' is set to 'I' - 1.

The ninth instruction is:
when 'to_create' equals zero,
then when 'is_old' equals zero,
then jump to the fifteenth instruction,
otherwise jump to the thirteenth instruction,
and when 'to_create' does not equal zero,
then when 'standard_level' equals zero AND 'I' equals 'L' - 1,
then 'Ob.value' is set to 'marker[ zero ]' and 'marker[ zero ]' is set to 'marker[ zero ]' + 'b', otherwise 'Ob.value' is set to 'marker['standard_level']' and 'marker['standard_level']' is set to 'marker['standard_level']' + (1 - 2 * ('standard_level' AND 1)) * 'b'.

The tenth instruction is:
'Ob.where' is set to 'Ui'.

The eleventh instruction is:
'Ob.what' is set to 'what'.

The twelfth instruction is:
'Ob.according' is set to 'according'.

The thirteenth instruction is:
'Pc' is set to 'Ob.value'.

The fourteenth instruction is:
when 'I' does not equal zero,
then jump to the fifth instruction.

The fifteenth instruction is:
end process.

### (4) This section defines the minimum required for the space of the invention:

The invention space of the invention objects is called 'Pile space'. 'Pile space' provides a generic and open space for insertion of connections of 'Pile objects'. 'Pile space' is a space of the next orders of activities. The present invention provides directly a technique of three generic connections simultaneously inserting each other in different ways, defining the minimum required for the space of the invention:

**'Fan Connection' -** comparable to the connection of set and element/s in set theories, inserts a layer of connections in hierarchical form, when the global unique identifier of another object equals the outer identifier of the object/s, so that the 'fan apex' corresponding to the set is the other object and the 'fan value' corresponding to the element is the object.

Two cases are distinguished here:
· accessing the other object by the object, the method for which is 'get_the_object_Ui', when 'Ui' is set to the 'Ob.according' of the object;
· accessing/creating the object by the other object, the method for which is said 'combine_object' method described by its specification of use, which refers also to 'what' being the identifier of the object in the other object's one layer scope of 'fan connection', and when 'Ob' is the other object, then 'current_is' is set to one, otherwise 'according' is set to the global unique identifier of the other object.

**'Alternative Connection' -** inserts, as completely independent and coexistent connection form, into/by fan connection, when the 'alternative connection' is either a 'mentioning connection', when the global unique identifier of another object equals the absolute value of the 'inner identifier' of the object/s, when a negative 'inner identifier' belongs to an evaluating object and a positive 'inner identifier' belongs to a evaluated object, or alternatively, is a 'non-mentioning connection', when the 'inner identifier' connects to a 'non-mentioning' input. Two cases are distinguished here:
· accessing the mentioned object by mentioning object, the method for which is 'get_the_object_Ui', when Ui is set to the absolute value of the inner identifier of the mentioning object;
· accessing/creating the object by the other object, the method for which is the 'combine_object' method described by its specification of use, which refers also to 'according' being the unique identifier of a 'fan apex', and when 'Ob' is said 'fan apex', then 'current_is' is set to one, otherwise 'according' is set to the unique identifier of said 'fan apex'; when the object is mentioning object, then 'standard_level' is set to one, otherwise 'standard_level' is set to zero; when the object is an evaluated object, then 'what' is set to 'Ob.where' of the mentioned object; and when the object is an evaluating object, then 'what' is set to -1 * 'Ob.where' of the mentioned object.

**'Sharing Connection' -** inserts 'fan connection', but still keeps the 'fan connection' form, by having identical 'combinative pointers' belonging to different objects, when the 'where' of the shared object equals the 'according' of the 'fan value' object/s of the shared 'fan connection' and when the 'where' of the sharing object/s does not equal the 'according of the 'fan value' object/s of the shared 'fan connection'. The methods for this use the 'fan connection' methods or the 'alternative connection' methods for accessing both shared and sharing objects.
The method of creating the 'sharing object' is to get the 'shared object' and the object which shall be the 'sharing object' and then to set the 'Ob.value' of this 'sharing object' to the 'Ob.value' of the 'shared object'.

The **default precedence** in 'fan connection' is: evaluating objects precede the 'fan apex' precedes the evaluated objects, at any 'fan layer'. This enables any 'fan apex' to be evaluated by any 'Pile Object' through 'mentioning connection'. Any object can have either a 'combinative pointer' value or an 'exclusive' value when any 'fan apex' has 'combinative pointer' value. The ability of 'Pile object' to have 'exclusive' value and 'non-mentioning connection' enable other connections than those specified here. The connective qualities of 'mentioning Pile Object' are either evaluated or evaluating, and either combinative or exclusive, thus the evaluated object having exclusive value has evaluated exclusive connective quality, the evaluated object having combinative pointer value has evaluated combinative connective quality, the evaluating object having exclusive value has evaluating exclusive connective quality, and the evaluating object having combinative pointer value has evaluating combinative connective quality.

### (5) This section describes the process of 'piling data' in the preferred embodiment of the invention:

The functions here are given as general principles of the preferred embodiment and can be optimized depending various applications and using different programming languages.

### The default invention data construction is as follows:

The linear data in the invention 'Pile' is coded by specific torsion 'T', attributed to the specific 'where' 'b' (for belonging) and is defined as figures 'F' upon locations 'L', when the 'F'('L') is the figure 'F' in the location 'L' of said linear data, and when the maximum of different identities of a figure is two times 'max_where'. This data is in a defined scope by 'fan values' of a specific fan which are connected in 'fan connections' as well as in 'mentioning connections'. The 'fan connection' layering is marked by the integer 'S' (for step), when said 'fan values' are marked by 'S' equals minus one. The 'mentioning connection' layering is marked by the integer 'P' (for precedence). Any 'F' is coded by 'non-mentioning' 'what' equals 'F', when 'P' and 'S' equal zero. When 'S' equals minus one, then 'L' equals zero. When 'S' and 'P' equal zero, then 'L' equals one. Except of those two cases any other 'L' of any 'F' is coded by mentioning object. In these cases the 'L' of the mentioning object equals the 'L' of the fan apex of the mentioning object added to the 'L' of the mentioned object. In addition when the 'L' of the mentioning object equals two in a power of the 'P' plus one and the 'S' equals one, then the written object is also mentioned as a fan value, the 'S' of which equals zero and the 'P' of which is increased by one.

### Reading

In reading, 'L' precedes 'F', layering of connections decreases and mentioning precedes fan. Reading (in loop) follows mentioning connections while collecting last-in-first-out fan apexes until 'P' and 'S' equal zero, then collecting the 'F'. This reading continues following the mentioning connection from next said fan apex, until there is no more (end of loop).
In a fan of a predefined negative 'P' and of 'S' equals zero, the exclusive 'value' of the 'mentioning' 'what', which equals 'b', equals 'where' of the reading beginning, and the exclusive 'value' of the 'mentioning' 'what', which equals minus 'b', equals 'T'. (Fig. 5-9)

### Initialization

This initialization is also done first and only once in the system lifetime.
The structure object of elements specified as a type of 'apexion' including the following elements: integer 'where', specifying the apex 'Ui' and integer'value', specifying the Combinative Pointer belongs to the said fan apex.
The structure object of elements specified as a type of 'out_write_data' including the following elements:
integer'old' and integer 'action_outcome'.
'frame'['MAXframe'] initialized here as an array of the type 'apexion'.
'out_figc', 'get_y_fold' and 'outSIZE' are initialized here as integers.
'Sfigure' and 'USfigure' are initialized here as an pointers.

### This method is called here 'fix_to_text':

This method gets the integer 'strinG_remain' and the pointer to 'The_byte_size' bytes
object 'b8_str' and sets the right side difference of bytes between 'The_byte_size' and 'strinG_remain' to null bytes of 'b8_str'.

### This method is called here 'out_fig':

This method sets 'out_figc' to the number of the not null bytes which
'Ob.what' has, copies 'out_figc' bytes of 'Ob.what' to 'Sfigure' and sets 'Sfigure' to 'Sfigure'
plus 'out_figc' and 'outSIZE' to 'outSIZE' minus 'out_figc'.
'The_bit_size' set to 'L' multiplied by 'q',
'The_byte_size' set to 'The_bit_size' / 8,
'The_byte_size_exponent' set to log to 2 ('The_byte_size')
'size_of_block_of_bytes' set to #65535#,
'The_entity_id' set to #254#,
'The_entity' set to 'NEG_OF('The_entity_id'),
'The_entity_figue_path' set to 'NEG_OF(255)',
'The_sharingness' set to 'NEG_OF(253)',
'The_exclusiveness' set to 'NEG_OF(252)',
'f_s_a_apex' set to #2#,
'f_s_b_apex' set to #7#,
'MAXframe' set to #48#,
'max_y_fold' set to #256#
and 'max_x_fold' set to #256#
are initialized here as constants.

### This method is called here 'install_the_frame':

The specification of use of this method is:
The method is executed second, after the 'basic_install' method and only once in the system lifetime, for installing the frame of the data in the pile.
The process is described by the following ten linear instructions:

The first instruction is:
initializing the integer 'last_frame' set to zero
and 'Ui' is set to zero.

The second instruction is:
'get_the_object_Ui'.

The third instruction is:
'Ob,value' is set to 'marker[ zero ]' and
'marker[ zero ]' is set to 'marker[ zero ]' plus 'b'.

The fourth instruction is:
'current_is' is set to zero,
'to_create' is set to one,
'standard_level' is set to zero,
'according' is set to 'Ob.where',
and 'what' is set to 'NEG_OF(#768#)'.

The fifth instruction is:
'combine_object'.
The sixth instruction is:
'Ob.value' is set to 'marker[zero]',
'marker[ zero ]' is set to 'marker[ zero ]' plus 'b',
'frame['last_frame'].where' is set to 'Ob.where',
'frame['last_frame'].value' is set to 'Ob.value'
and 'last_frame' is set to 'last_frame' plus one.

The seventh instruction is:
'according' is set to 'Ob.where',
and 'what' is set to 'NEG_OF(#1#)'.

The eighth instruction is:
'combine_object'.

The ninth instruction is:
'Ob.value' is set to 'marker[ zero ]',
'marker[ zero ]' is set to 'marker[ zero ]' plus 'b',
'frame['last_frame'].where' is set to 'Ob.where',
'according' is set to 'Ob.where',
'frame['last_frame'].value' is set to 'Ob.value'
and 'last_frame' is set to 'last_frame' plus one.

The tenth instruction is:
when 'last_frame' is smaller than #39#,
then 'what' is set to 'Ob.where',
'combine_object',
'Ob.value' is set to 'marker[zero ]',
'marker[ zero ]' is set to 'marker[ zero ]' plus 'b',
'frame['last_frame'].where' is set to 'Ob.where',
'frame['last_frame'].value' is set to 'Ob.value',
'last_frame' is set to 'last_frame' plus one
and jump to the ninth instruction.

### This method is called here 'characterizing_data_by_op_and_fp':

The specification of use of this method is:
The method gets the integer operator' and 'figure_path_apex' of the type 'apexion'. This process is defined by the following seventeen linear instructions :

The first instruction is:
when 'ls_old' equals zero then jump to the seventeenth instruction.

The second instruction is:
initializing the integers
'P_where' set to 'Ob.where',
'P_according' set to 'Ob.according',
'P_what' set to 'Ob.what',
and 'P_value' set to 'Ob.value'.

The third instruction is:
'current_is' is set to zero,
'to_create' is set to one,
'standard_level' is set to one,
'according' is set to 'frame['f_s_b_apex'].where',
and 'what' is set to 'P_what'.

The fourth instruction is:
'combine_object'.

The fifth instruction is:
'current_is' is set to one,
'standard_level' is set to. zero,
'according' is set to 'Ob.where'
and 'what' is set to 'NEG_OF( 'The_entity_id' minus '_operator' )'.

The sixth instruction is:
'combine_object'.

The seventh instruction is:
'standard_level' is set to one,
'according' is set to 'Ob.where'
and 'what' is set to 'P_where'.

The eighth instruction is:
'combine_object'.

The ninth instruction is:
when '_operator' is not smaller than 'The_byte_size',
then jump to the sixteenth instruction.

The tenth instruction is:
'current_is' is set to zero,
'to_create' is set to one,
'standard_level' is set to one
and 'what' is set to 'NEG_OF('P_according')'.
The eleventh instruction is:
'combine_object'.

The twelfth instruction is:
'according' is set to 'figure_path_apex.where'
and 'what' is set to 'P_where'.

The thirteenth instruction is:
'combine_object'.

The fourteenth instruction is:
and 'what' is set to 'P_according'.

The fifteenth instruction is:
'combine_object'.

The sixteenth instruction is:
'Ui' is set to 'P_where' and 'get_the_object_Ui'

The seventeenth instruction is:
end this process.

### This method is called here 'characterizing_data_by_op':

The specification of use of this method is:
The method gets the integer operator' and returns 'figure_path_apex' of the type 'apexion'.
This process is defined by the following twenty-one linear instructions :

The first instruction is:
initializing the integers
'P_where' set to 'Ob.where',
'P_according' set to 'Ob.according',
'P_what' set to 'Ob.what',
and 'P_value' set to 'Ob.value'
and initializing the 'figure_path_apex' of the type 'apexion'
and when 'ls_old' equals zero then jump the twentieth instruction.

The second instruction is:
when '_operator' is not smaller than 'The_byte_size',
then jump to the eighth instruction,
otherwise
'current_is' is set to zero,
and 'to_create' is set to zero.

The third instruction is:
'according' is set to 'frame['f_s_b_apex'].where'.

The fourth instruction is:
'what' is set to 'P_what'.

The fifth instruction is:
'combine_object'.

The sixth instruction is:
'current_is' is set to one and 'what' is set to 'The_entity_figue_path'.

The seventh instruction is:
'combine_object'.

The eighth instruction is:
'current_is' is set to zero,
'to_create' is set to one,
'standard_level' is set to one,
'according' is set to 'frame['f_s_b_apex'].where'
and 'what' is set to 'P_what'.

The ninth instruction is:
'combine_object'.

The tenth instruction is:
'figure_path_apex.where' is set to 'Ob.where'
and 'figure_path_apex.value' is set to 'Ob.value'.

The eleventh instruction is:
'current_is' is set to one,
'according' is set to 'Ob.where'
and 'what' is set to 'NEG_OF( 'The_entity_id' minus '_operator' )'.

The twelfth instruction is:
'combine_object'.

The thirteenth instruction is:
'according' is set to 'Ob.where'
and 'what' is set to 'P_where'.

The fourteenth instruction is:
'combine_object'.

The fifteenth instruction is:
when '_operator' is not smaller than 'The_byte_size',
then jump to the twentieth instruction.

The sixteenth instruction is:
'current_is' is set to zero
and what' is set to 'NEG_OF('P_according')'.

The seventeenth instruction is:
'combine_object'

The eighteenth instruction is:
'standard_level' is set to zero,
'according' is set to 'figure_path_apex.where'
and what' is set to 'The_entity_figue_path'.

The nineteenth instruction is:
'combine_object'.
The twentieth instruction is:
'figure_path_apex.where' is set to 'Ob.where',
'figure_path_apex.value' is set to 'Ob.value',
'Ui' is set to 'P_where',
and 'get_the_object_Ui'.

The twenty-first instruction is:
return 'figure_path_apex' and end this process.

### This method is called here 'write_data':

The specification of use of this method is:
The method gets the pointer 'FigureS' and the integers 'last_Location', 'for_whom' and
'_operator'.
This process is defined by the following forty-one linear instructions:

The first instruction is:
initializing the integers
'kuku' set to 'f_s_b_apex' minus ('_operator' >> 'The_byte_size_exponent'),
'Location' set to one,
'open' set to zero,
'last_P' set to zero,
'max',
'maX',
'P'
and 'p'.

The second instruction is:
initializing the pointer to integer
'figures' set to 'Figures'.

The third instruction is:
initializing the objects in the type of 'apexion'
'the_beginning' set to 'frame['kuku']'
and 'figure_path_apex'
and the array of 'apexion' 'apex_p[#32#]'.

The fourth instruction is:
initializing the object in the type of 'out_write_data''_'.

The fifth instruction is:
'_.old' is set to zero.

The sixth instruction is:
'last_Location' is set to 'last_Location' plus one
and 'figures' is set to 'figureS' plus 'last_Location' minus 'Location'.

The seventh instruction is:
when 'Location' is not smaller than 'last_Location',
then jump to the thirtieth instruction.

The eighth instruction is:
'current_is' is set to zero,
'to_create' is set to one
and 'standard_level' is set to one,

The ninth instruction is:
'according' is set to 'the_beginnig.where',
'what' is set to the integer seated on the pointer 'figureS'
and 'combine_object'.

The tenth instruction is:
'figure_path_apex' is set to 'characterizing_data_by_op('_operator')'.

The eleventh instruction is :
'P' is set to zero
and 'max' is set to one.

The twelfth instruction is:
when ( 'Location' AND 'max' ) equals zero,
then jump to the sixteenth instruction.

The thirteenth instruction is:
'current_is' is set to zero,
'to_create' is set to one,
'standard_level' is set to one,
'according' is set to 'apex_p['P'].where',
'what' is set to 'Ob.where',
'open' is set to ('open' XOR 'max' ),
and 'combine_object'.

The fourteenth instruction is:
'characterizing_data_by_op_and_fp( '_operator', 'figure_path_apex')'.

The fifteenth instruction is:
'P' is set to 'P' plus one ,
'max' «= 'one'
and jump to the twelfth instruction.

The sixteenth instruction is:
when 'Location' is not smaller than 'last_Location' minus one,
then jump to the twenty-ninth instruction.

The seventeenth instruction is:
when 'P' equals zero,
then'_.old' is set to '_.old' plus 'ls_old' multiplied by 'max'
and jump to the twenty-first instruction,
otherwise when 'last_P' is smaller than 'P', then 'last_P' is set to 'P'.

The eighteenth instruction is:
'current_is' is set to zero,
'to_create' is set to one,
'standard_level' is set to one,
'according' is set to 'frame[ 'f_s_b_apex' plus 'P' ].where',
and 'what' is set to 'Ob.where'.

The nineteenth instruction is:
'combine_object'
and '_.old' is set to '_.old' plus 'ls_old' multiplied by 'max'.

The twentieth instruction is:
'characterizing_data_by_op_and_fp( '_operator', 'figure_path_apex')'.

The twenty-first instruction is:
when 'ls_old' equals zero,
then 'Ob.value' is set to 'marker[ one ]'
and 'marker[ one ]' is set to 'marker[ one ]' - 'b'.

The twenty-second instruction is:
'apex_p['P'].where' is set to 'Ob.where',
'apex_p['P'].value' is set to 'Ob.value'
and 'open' is set to ('open' XOR 'max').

The twenty-third instruction is:
'maX' is set to one
and 'p' is set to zero

The twenty-fourth instruction is:
when 'p' is bigger than 'P',
then jump to the twenty-ninth instruction.

The twenty-fifth instruction is:
when ('open' AND 'maX' ) does not equal to zero and '_operator' is smaller than 'The_byte_size',
then initializing the integer 'the_last_object_where' set to 'Ob.where',
'current_is' is set to zero,
'to_create' is set to one,
'standard_level' is set to one,
'according' is set to 'figure_path_apex.where',
and 'what' is set to 'NEG_OF('apex_p['p'].where')'.

The twenty-sixth instruction is:
'combine_object'.

The twenty-seventh instruction is:
'Ui' is set to 'the_last_object_where'
and 'get_the_object_Ui'.

The twenty-eighth instruction is:
'p' is set to 'p' plus one
and 'maX' <<= 'one'.

The twenty-ninth instruction is:
'Location' is set to 'Location' plus one,
'figures' is set to 'figures' minus one
and jump to the seventh instruction.

The thirtieth instruction is:
'last_P' is set to 'last_P' plus one,
'P' is set to 'P' plus one
and 'max' «= one.

The thirty-first instruction is:
when 'P' is not smaller than 'last_P',
then jump to the thirty-seventh instruction.

The thirty-second instruction is:
when ('open' AND 'max') equals zero,
then jump to the thirty-sixth instruction.

The thirty-third instruction is:
'current_is' is set to zero,
'to_create' is set to one,
'standard_level' is set to one,
'according' is set to 'apex_p['P'].where',
and 'what' is set to 'Ob.where'.

The thirty-fourth instruction is:
'combine_object'.

The thirty-fifth instruction is:
'characterizing_data_by_op_and_fp( '_operator', 'figure_path_apex')'

The thirty-sixth instruction is:
'max' <<= one,
'P' is set to 'P' plus one
and jump to the thirty-first instruction.

The thirty-seventh instruction is:
'_.action_outcome' is set to 'Ob.where',
'current_is' is set to zero,
'to_create' is set to one,
'standard_level' is set to one,
'what' is set to 'for_whom'
and 'according' is set to 'frame['f_s_a_apex'].where'.

The thirty-eighth instruction is:
'combine_object'.

The thirty-ninth instruction is:
'Ob.value' is set to 'NEG_OF('_.action_outcome')'
and 'what' is set to 'NEG_OF('for_whom')'.

The fortieth instruction is:
'combine_object'.

The forty-first instruction is:
'Ob.value' is set to ('_operator' >> 'The_byte_size_exponent').

The forty-second instruction is:
return _' and end this process.

### This method is called here 'load_data':

The specification of use of this method is:
The method gets the integer 'size', the pointer 'from' and the integer 'FoR_h'.
This process is defined by the following twenty-three linear instructions:

The first instruction is:
when 'size' is not bigger than zero,
then jump to the twenty-third instruction,
otherwise 'size' is set to 'size' minus one.

The second instruction is:
Initializing the integers
'load_x_fold' set to 'max_x_fold',
'load_y_fold' set to 'max_y_fold',
'load_z_fold' set to 'max_z_fold',
'punc_size',
'i',
'strinG_remain',
b8_strb,
and the arrays of integers
'load_outcome_x'['max_x_fold' ],
'load_outcome_y'[ 'max_y_fold' ],
'load_outcome_z'[ 'max_z_fold' ],
and the pointers to a byte
'strinG' set to 'from'
and 'strinG_punc'
and the pointer to 'The_byte_size' bytes object 'b8_str'.
and the '_o_w_b1_d' of the type 'out_write_data'.

The third instruction is:
when 'size' is not bigger than zero or 'load_z_fold' is not bigger than zero,
then jump to the nineteenth instruction,
otherwise 'strinG_punc' is set to 'strinG'.

The fourth instruction is:
when the byte value seated on 'strinG' is smaller then #33#
and 'strinG' minus 'strinG_punc' is smaller than 'max_s_fold',
then 'strinG' is set to 'strinG' plus one
and jump to the fourth instruction.

The fifth instruction is:
when 'strinG_punc' does not equal to 'strinG',
then jump to the seventh instruction.

The sixth instruction is:
when the byte value seated on 'strinG' is bigger then #32#
and 'strinG' minus 'strinG_punc' is smaller than 'max_s_fold',
then 'strinG' is set to 'strinG' plus one
and jump to the sixth instruction.

The seventh instruction is:
'punc_size' is set to 'strinG' minus 'strinG_punc'.

The eighth instruction is:
'strinG_remain' is set to ( 'punc_size' AND ( 'The_byte_size' minus one ) )
and 'size' is set to 'size' minus 'punc_size'.

The ninth instruction is:
'punc_size' >>= 'The_byte_size_exponent'.

The tenth instruction is:
when 'strinG_remain' equals zero
then 'load_x_fold' is set to 'load_x_fold' minus one,
'_o_w_b1_d' is set to
'write_data('strinG_punc','punc_size','FoR_h','The_byte_size' minus one),
'load_outcome_x['load_x_fold']' is set to '_o_w_b1_d.action_outcome'
and jump to the sixteenth instruction,
otherwise 'b8_str' is set to 'strinG_punc' plus 'punc_size'.

The eleventh instruction is:
'b8_strb' is set to the 'The_byte_size' bytes object seated on 'b8_str'.

The twelfth instruction is:
'fix_to_text('strinG_remain', 'b8_str')'.

The thirteenth instruction is:
'b8_str' is set to 'b8_str' minus 'punc_size'
'load_x_fold' is set to 'load_x_fold' minus one,
'_o_w_b1_d' is set to
'write_data('b8_str',noe plus 'punc_size','FoR_h','The_byte_size' minus one),
and 'load_outcome_x['load_x_fold']' is set to '_o_w_b1_d.action_outcome'.

The fourteenth instruction is:
'b8_str' is set to 'b8_str' plus 'punc_size'.

The fifteenth instruction is:
the 'The_byte_size' bytes object seated on 'b8_str' is set to 'b8_strb'.

The sixteenth instruction is:
when 'load_x_fold' equals zero,
then jump to the nineteenth instruction.

The seventeenth instruction is:
'load_y_fold' is set to 'load_y_fold' minus one,
'_o_w_b1_d' is set to
'write_data('load_outcome_x' plus 'load_x_fold','max_x_fold' minus 'load_x_fold' plus one, 'FoR_h', two times 'The_byte_size' minus one ),
'load_outcome_y'['load_y_fold'] is set to '_o_w_b1_d.action_outcome',
'load_x_fold' is set to 'max_x_fold'
and when 'load_y_fold' equals zero then jump to the nineteenth instruction.

The eighteenth instruction is:
'load_z_fold' is set to 'load_z_fold' minus one,
'_o_w_b1_d' is set to
'write_data('load_outcome_y' plus 'load_y_fold', 'max_y_fold' minus 'load_y_fold' plus one,'FoR_h', three times 'The_byte_size' minus one ),
'load_outcome_z'['load_z_fold'] is set to '_o_w_b1_d.action_outcome'
and 'load_y_fold' is set to 'max_y_fold'.

The nineteenth instruction is:
when 'load_z_fold' equal zero,
then lay out the message 'error: need bigger max_z_fold'.

The twentieth instruction is:
when 'load_x_fold' does not equal to 'max_x_fold',
then 'load_y_fold' is set to 'load_y_fold' minus one,
'_o_w_b1_d' is set to
'write_data('load_outcome_x' plus 'load_x_fold','max_x_fold' minus 'load_x_fold' plus one, 'FoR_h', two times 'The_byte_size' minus one )
and 'load_outcome_y'['load_y_fold'] is set to '_o_w_b1_d.action_outcome'.

The twenty-first instruction is:
when 'load_y_fold' does not equal to 'max_y_fold',
then 'load_z_fold' is set to 'load_z_fold' minus one,
'_o_w_b1_d' is set to
'write_data('load_outcome_y' plus 'load_y_fold','max_y_fold' minus 'load_y_fold' plus one,'FoR_h', three times 'The_byte_size' minus one )
and 'load_outcome_z'['load_z_fold'] is set to '_o_w_b1_d.action_outcome'.

The twenty-second instruction is:
when 'load_z_fold' does not equal to 'max_z_fold',
then 'write_data('load_outcome_z' plus 'load_z_fold','max_z_fold' minus 'load_z_fold' plus one,
'FoR_h', four times 'The_byte_size' minus one ).

The twenty-third instruction is:
end this process.

### This method is called here 'read':

The specification of use of this method is:
The method gets the 'get_y_fold' which specifies the number of folding of the pilled data , loading the read data to a buffer to of which 'USfigure' is its beginning pointer and returns Boolean as true or false of completing the reading.
This process is defined by the following sixteen linear instructions:

The first instruction is:
initializing the integers
'next' set to zero
and 'get_last_y_fold' set to 'get_y_fold'.

The second instruction is:
initializing the arrays of integers
'accordingL[#32#]',
'get_outcome['max_y_fold']['max_x_fold']'
and 'get_x_fold['max_y_fold']'.

The third instruction is:
when 'get_last_y_fold' does not equal to zero,
then 'get_x_fold['get_last_y_fold']' is set to zero,
'get_last_y_fold' is set to 'get_last_y_fold' minus one
and jump to the third instruction.

The fourth instruction is:
'get_last_y_fold' is set to 'get_y_fold'.

The fifth instruction is:
'Sfigure' is set to 'USfigure'.

The sixth instruction is:
when 'Ob.according' equals 'frame['f_s_b_apex' minus 'get_y_fold'].where', then jump to the seventh instruction,
otherwise jump to the eighth instruction.

The seventh instruction is:
when 'next' does not equal to zero,
then jump to the tenth instruction,
otherwise jump to the eleventh instruction.

The eighth instruction is:
when 'Ob.according' is bigger than 'marker[one]',
then 'accordingL['next']' is set to 'Ob.according'
and 'next' is set to 'next' plus one.

The ninth instruction is:
'Ui' is set to 'A_bs('Ob.what')',
'get_the_object_Ui'
and jump to the sixth instruction.

The tenth instruction is:
when 'get_y_fold' does not equal to zero, then
'get_outcome['get_y_fold' minus one]['get_x_fold['get_y_fold' minus one]']' is set
to 'Ob.what',
'get_x_fold[ 'get_y_fold' minus one]' is set to 'get_x_fold['get_y_fold' minus one]' plus one
and jump to the sixth instruction,
otherwise 'out_fig',
'next' is set to 'next' minus one,
'Ui' is set to 'accordingL['next']',
'get_the_object_Ui'
and jump to the sixth instruction.

The eleventh instruction is:
when 'get_y_fold' does not equal to zero,
then 'get_y_fold' is set to 'get_y_fold' minus one
and jump to the fifteenth instruction.

The twelfth instruction is:
when 'outSIZE' is bigger than zero,
then 'out_fig', otherwise the return value is set to false
and jump to the sixteenth instruction.

The thirteenth instruction is:
when 'get_x_fold['get_y_fold']' does not equal to zero,
then jump to the fifteenth instruction.

The fourteenth instruction is:
'get_y_fold' is set to 'get_y_fold' plus one
and when 'get_y_fold' is bigger than 'get_last_y_fold',
then the return value is set to true
and jump to the sixteenth instruction,
otherwise jump to the thirteenth instruction.

The fifteenth instruction is:
'get_x_fold['get_y_fold'] is set to 'get_x_fold'['get_y_fold'] minus one, 'Ui' is set to 'get_outcome['get_y_fold']['get_x_fold['get_y_fold']']', 'get_the_object_Ui', 'next' is set to zero and jump to the sixth instruction.

The sixteenth instruction is:
end the process.

### This method is called here 'read_data_for':

The specification of use of this method is:
The method uses the methods 'get_the_object_Ui', 'combine_object' and 'read' and it gets the 'for_whom' which specifies the unique identifier of which the data belongs and return
either Boolean as true or false of completing the reading or one of the following messages
14:'no operator', 15:'no for_whom', or 16:'no action_outcome'.
This process is defined by the following seven linear instructions :

The first instruction is:
'outSIZE' is set to 'size_of_block_of_bytes'.

The second instruction is:
'current_is' is set to zero.

The third instruction is:
'to_create' is set to zero.

The fourth instruction is:
'according' is set to 'frame ['f_s_a_apex'].where'.

The fifth instruction is:
'what' is set to 'NEG_OF('for_whom')'.

The sixth instruction is:
'combine_object'.

The seventh instruction is:
when 'ls_old' equals zero,
then message(14),
otherwise 'get_y_fold' is set to 'Ob.value',
'what' is set to 'for_whom',
'combine_object',
and when 'ls_old' equals zero,
then message(15)
otherwise 'Ui' is set to 'A_bs('Ob.value')',
'get_the_object_Ui'
and when 'ls_old' equals zero then message(16),
otherwise 'read('get_y_fold')'.

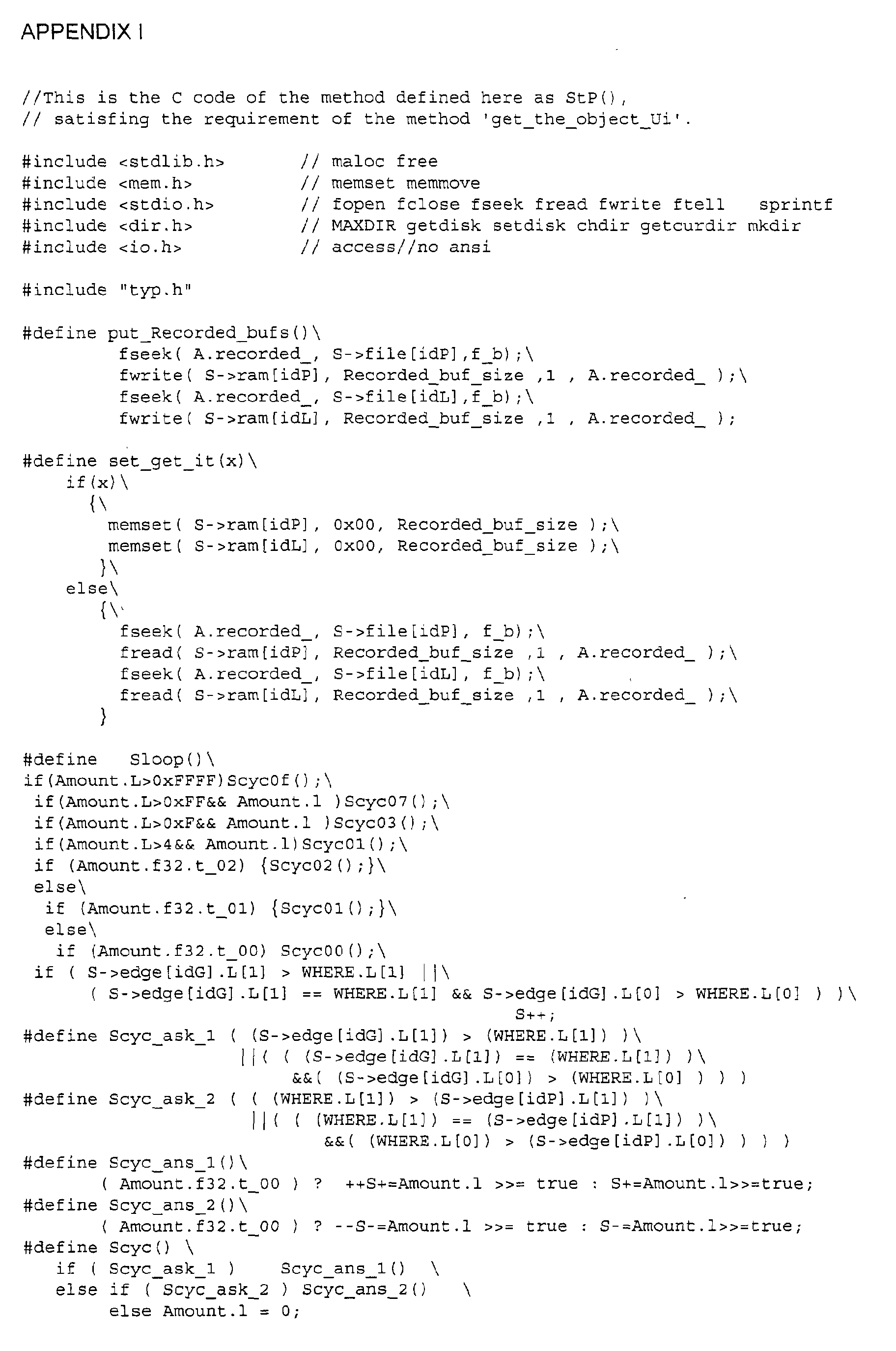

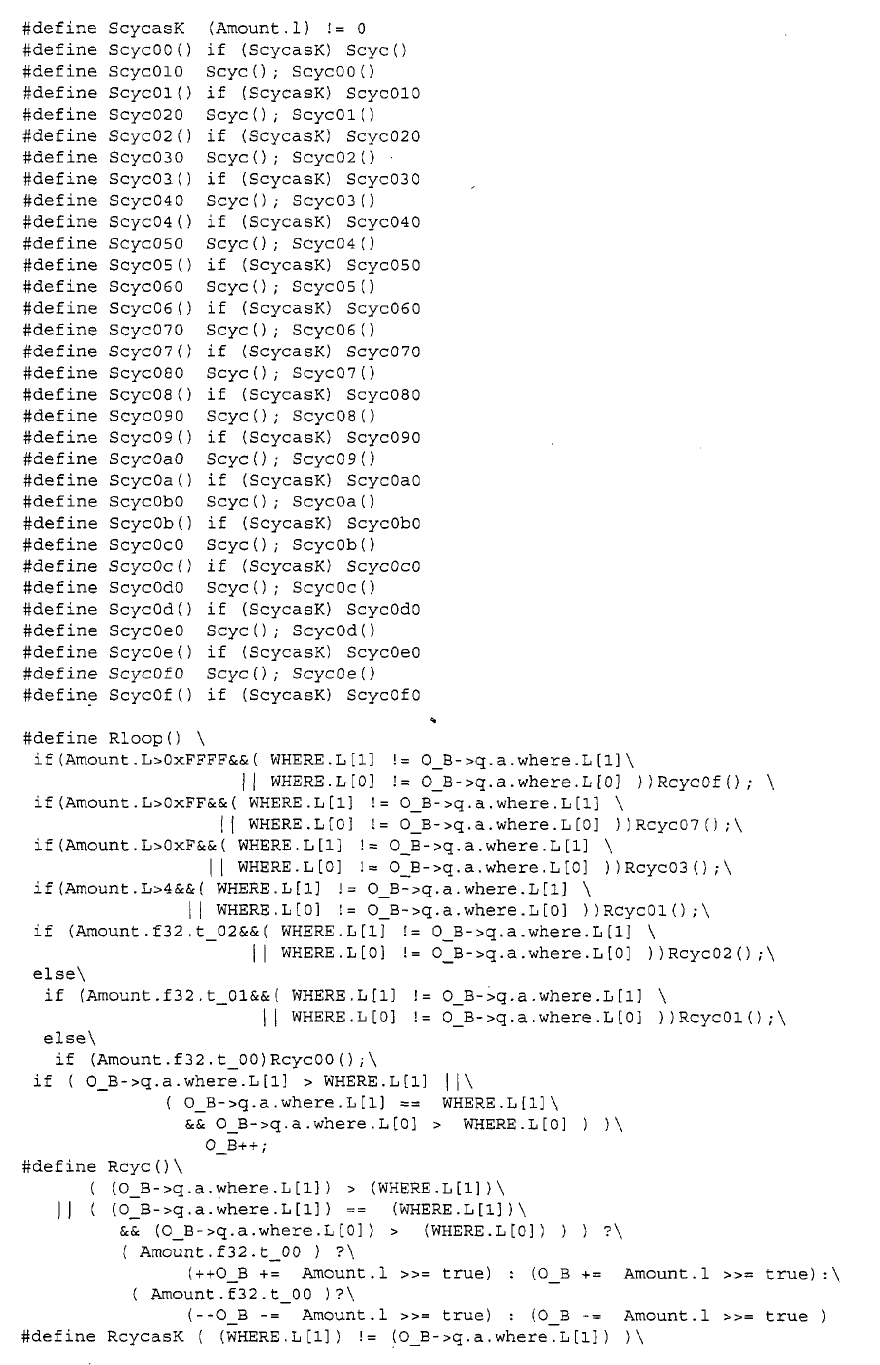

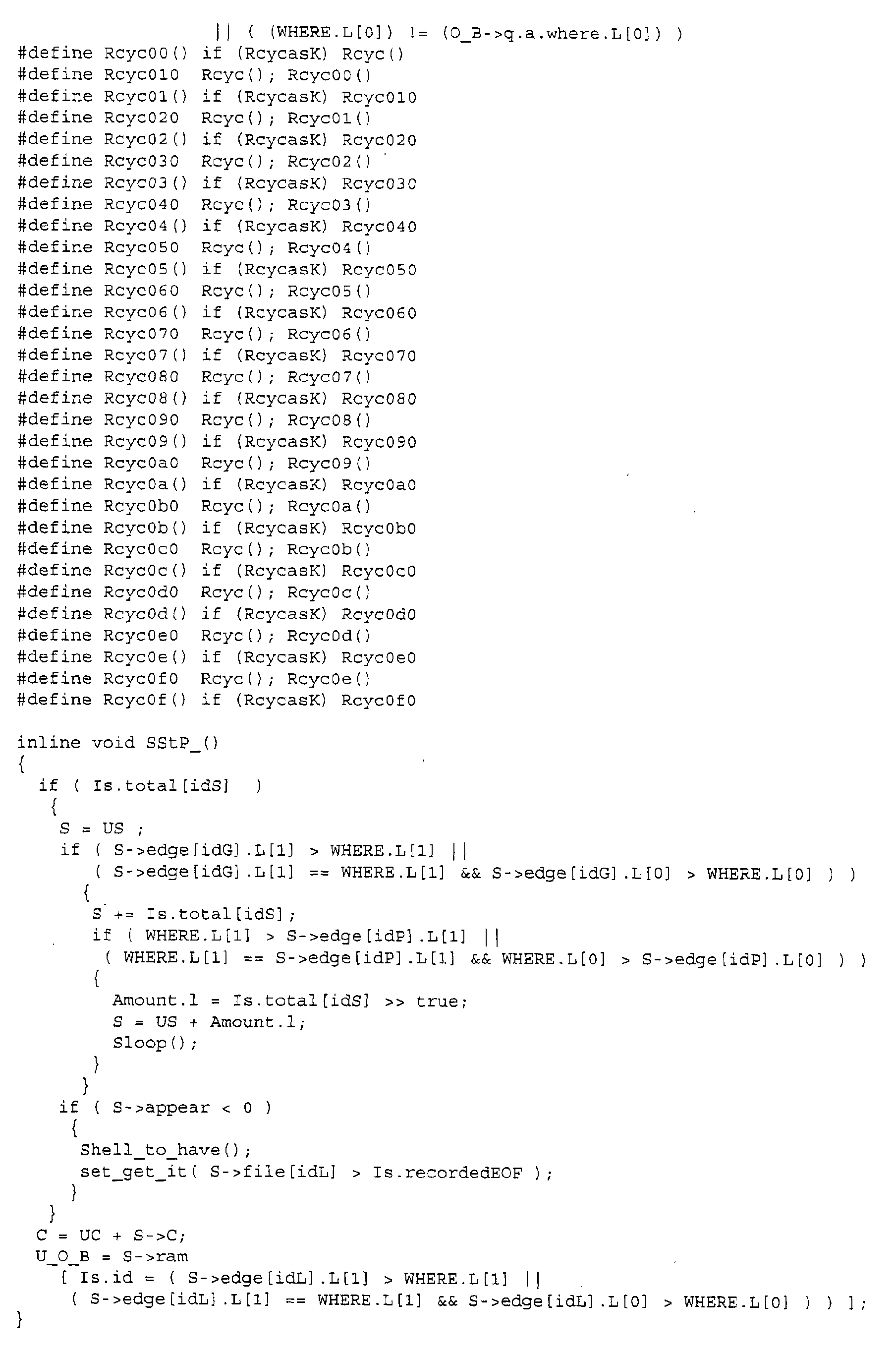

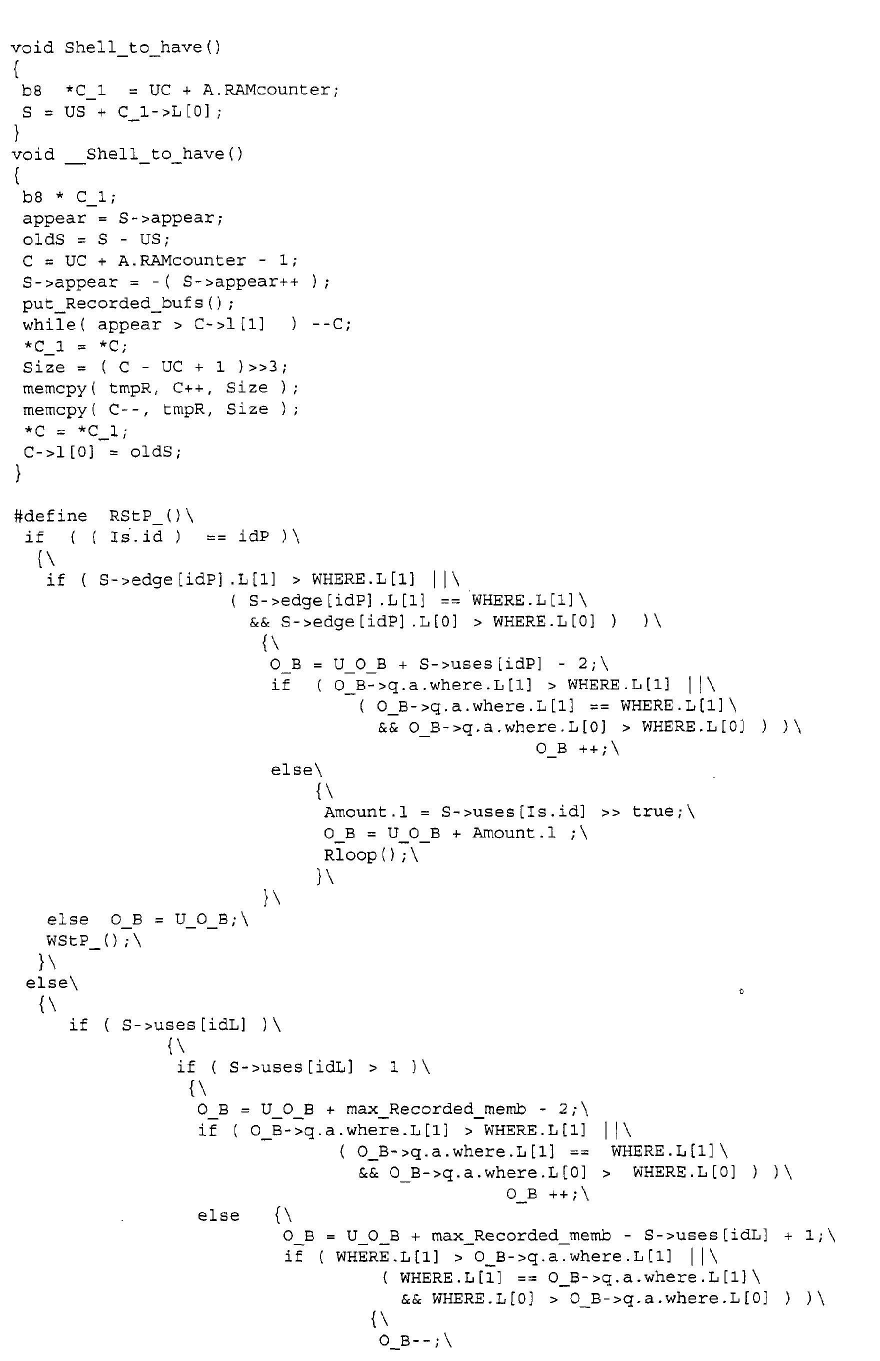

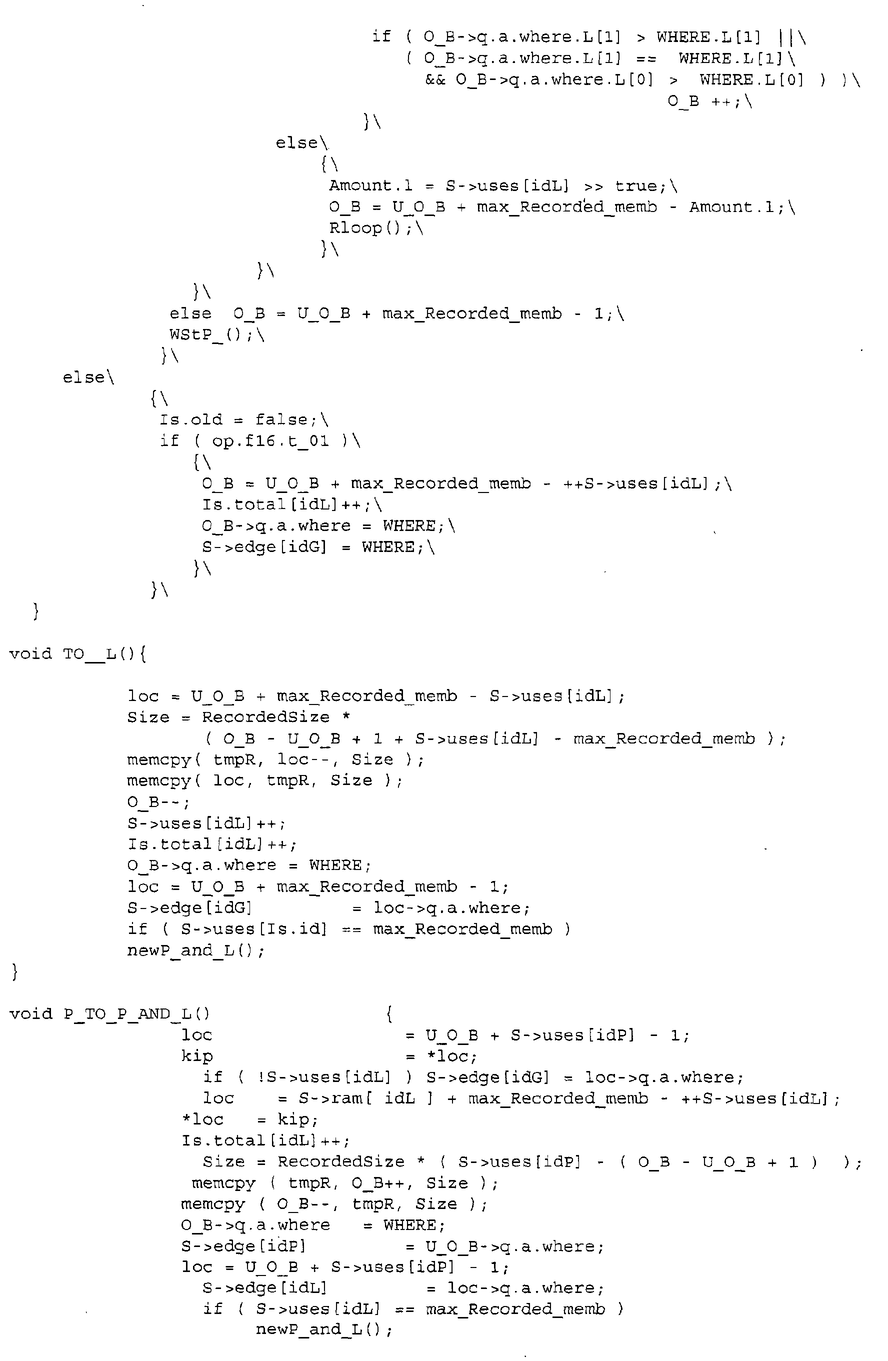

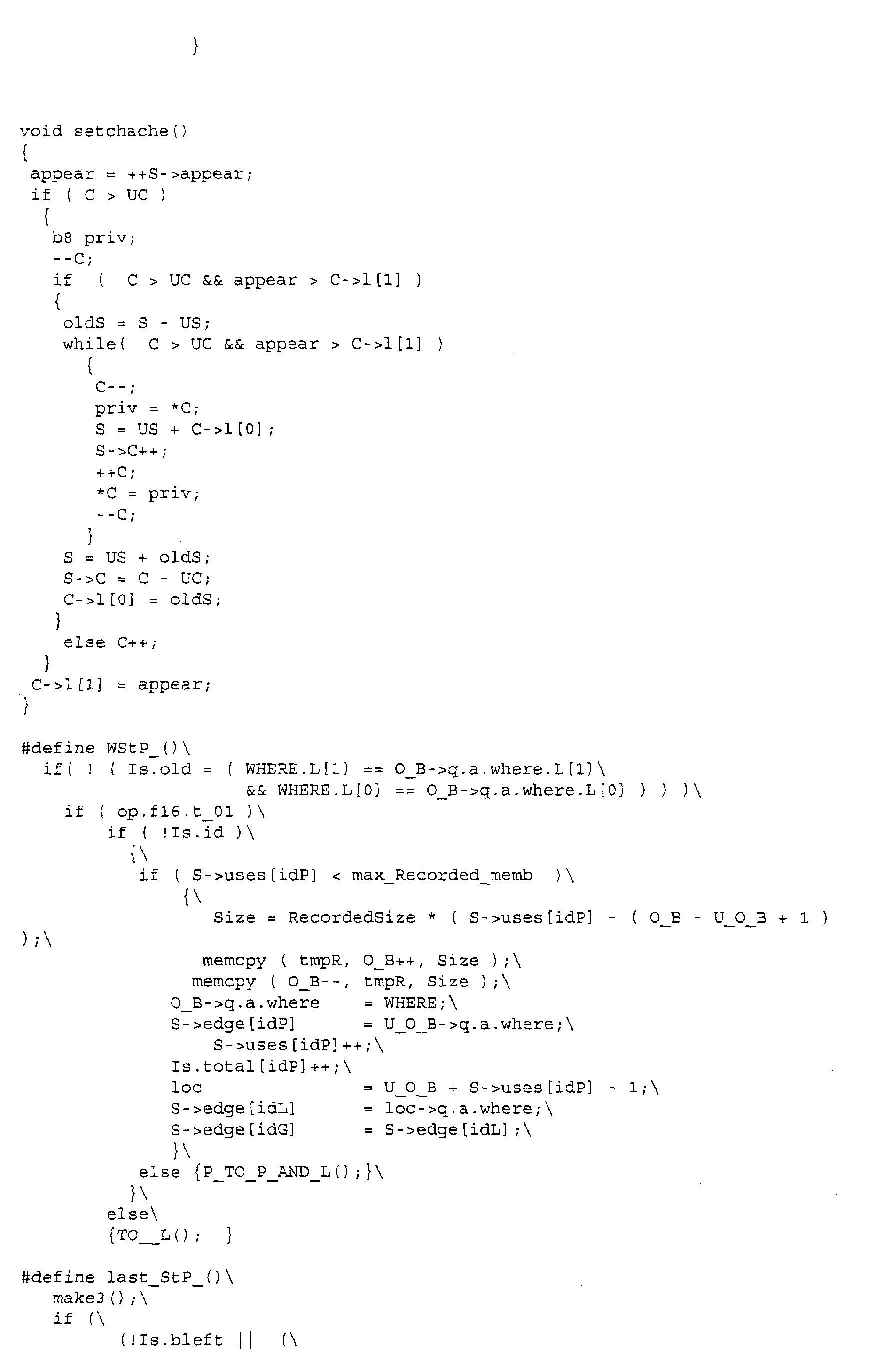

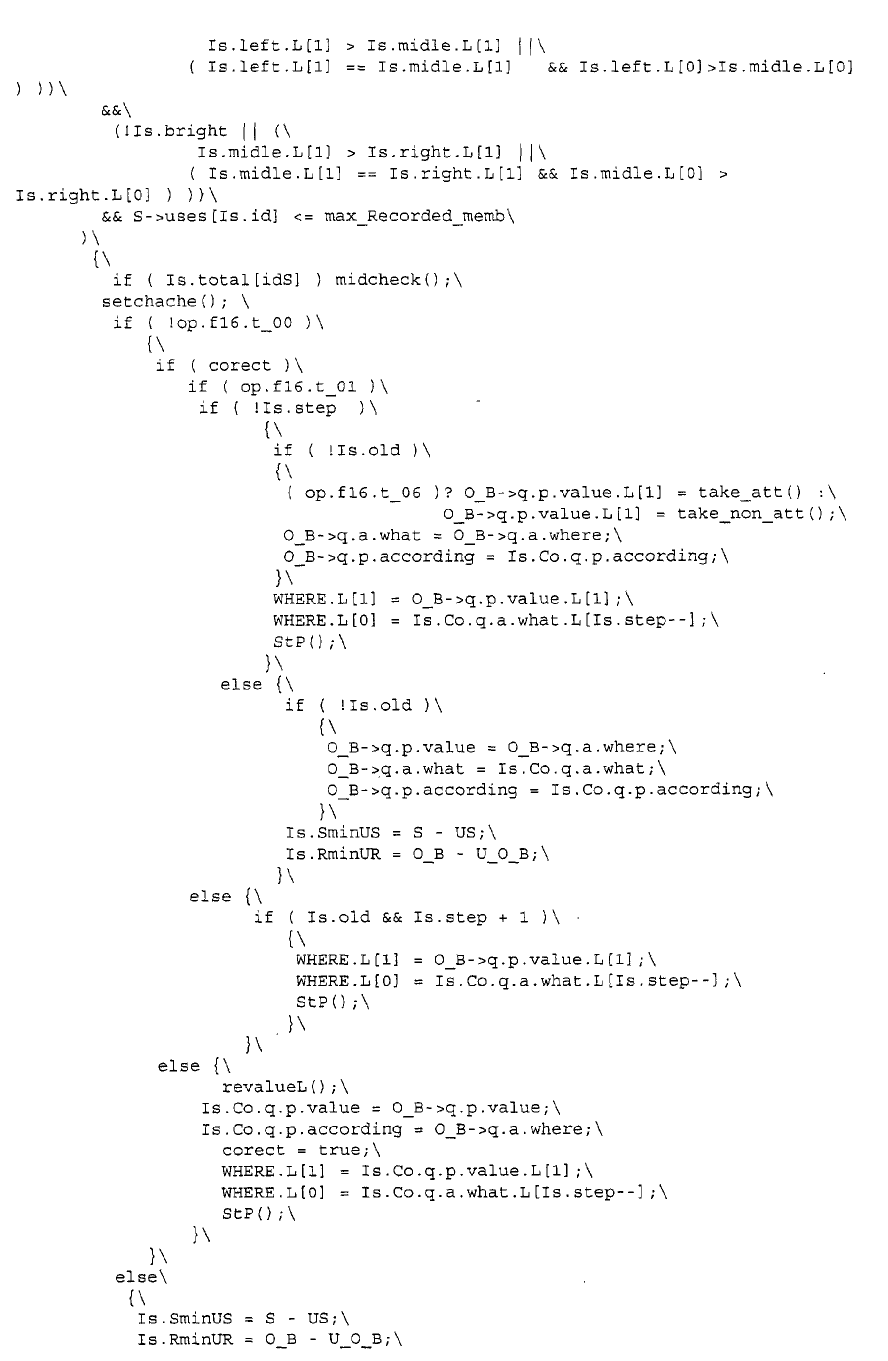

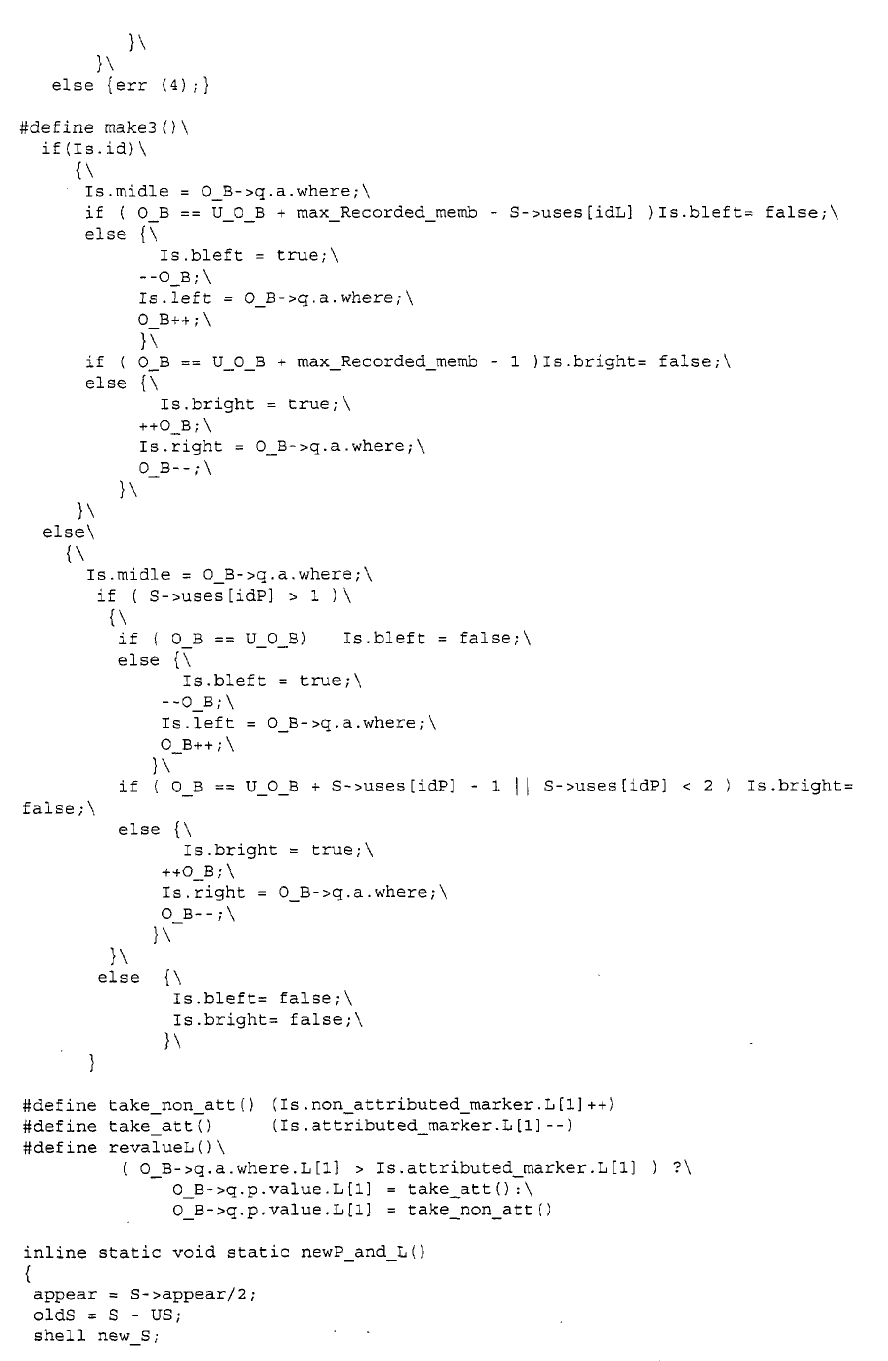

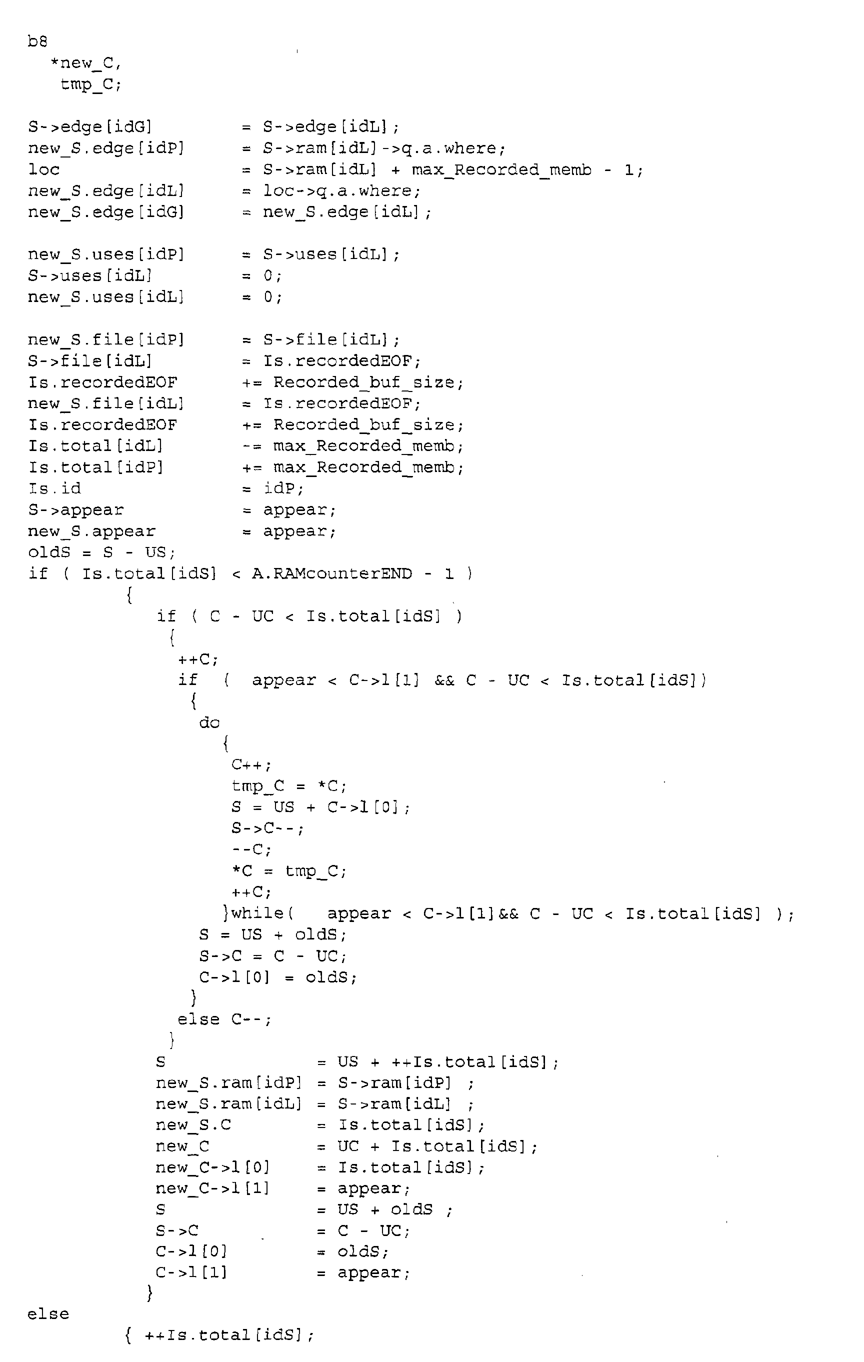

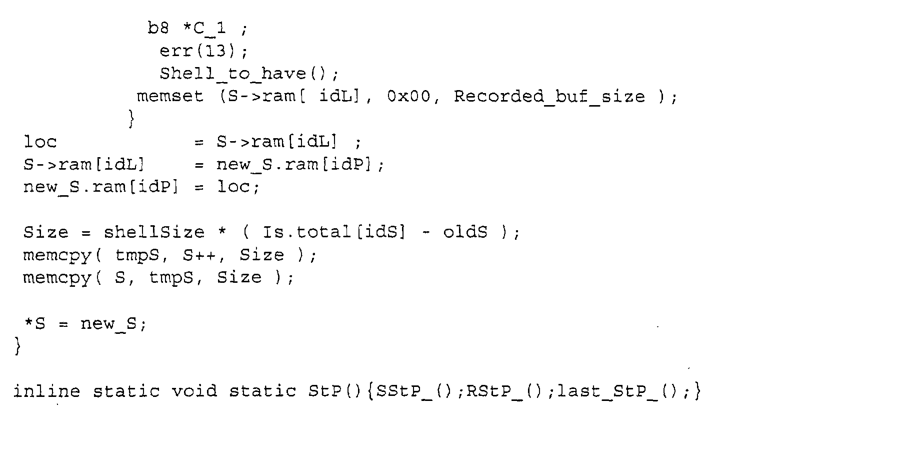

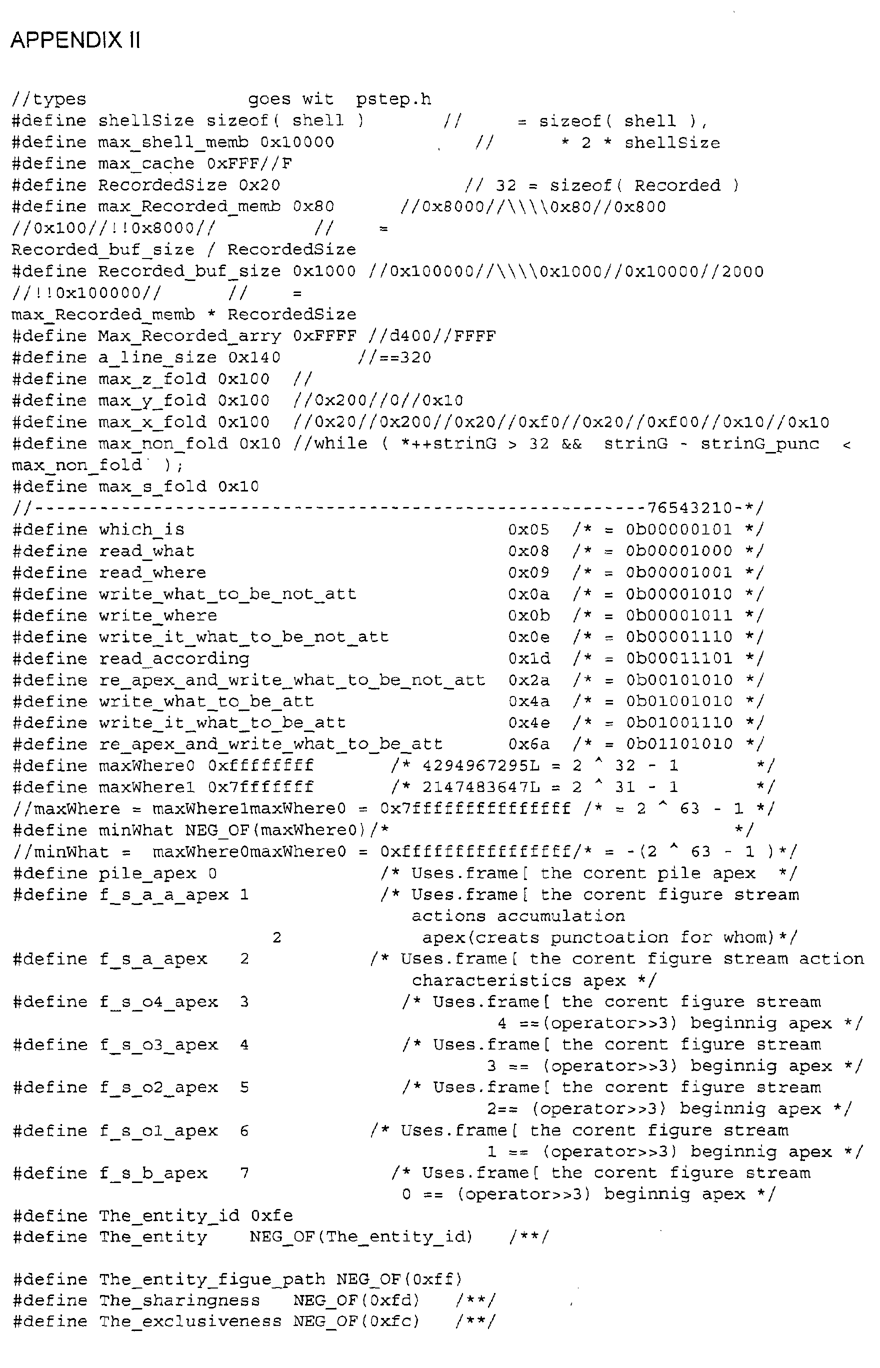

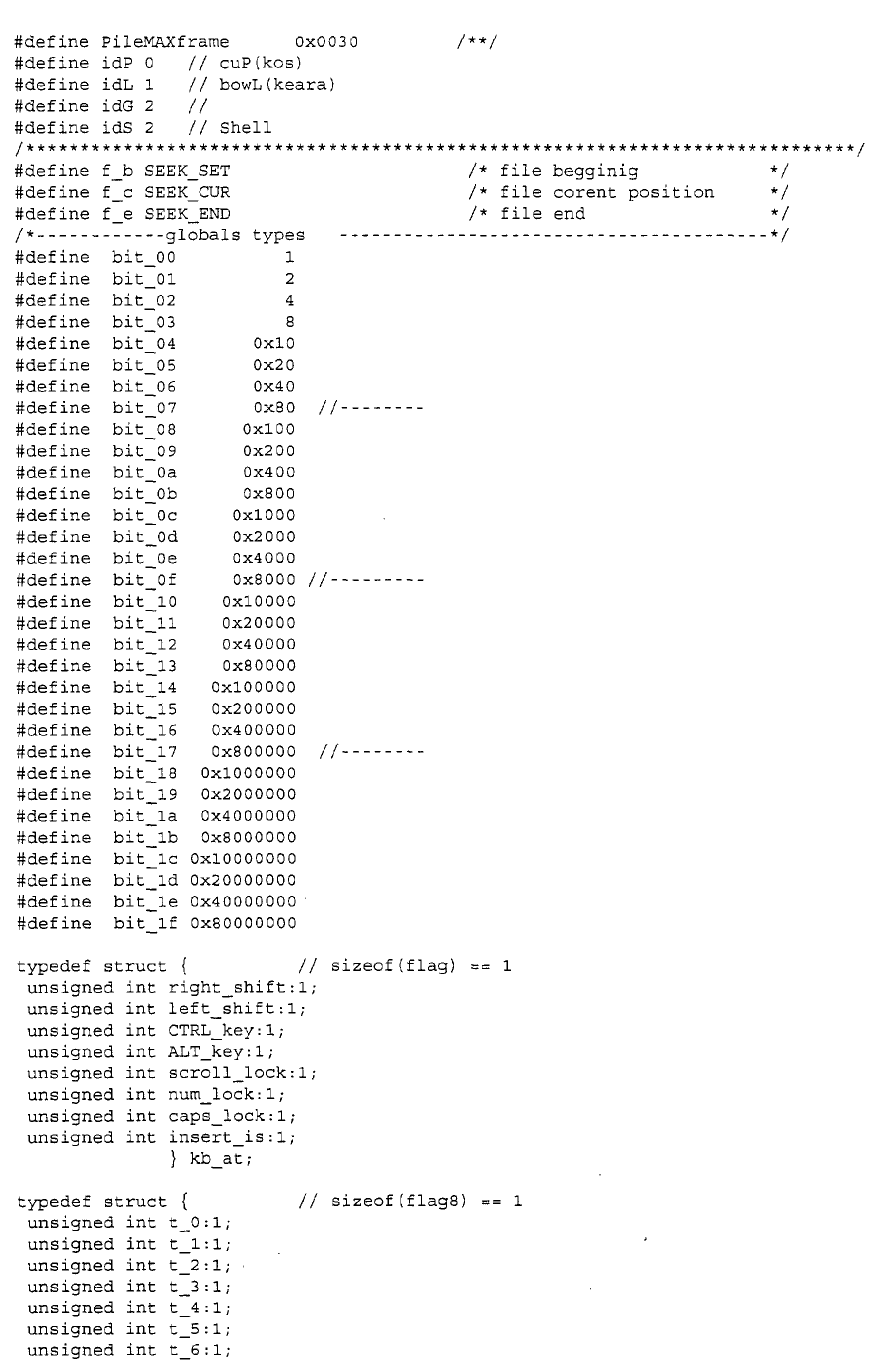

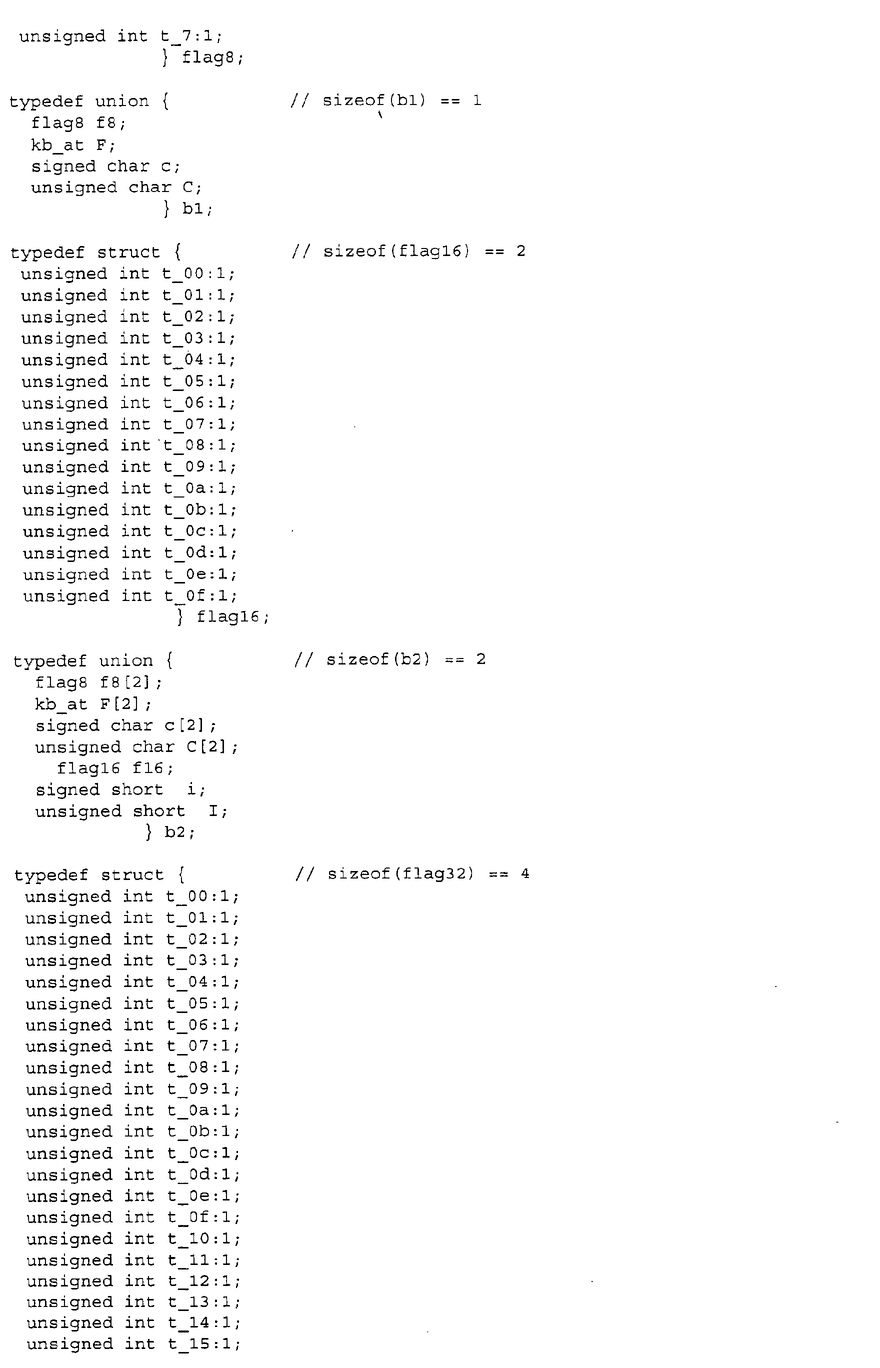

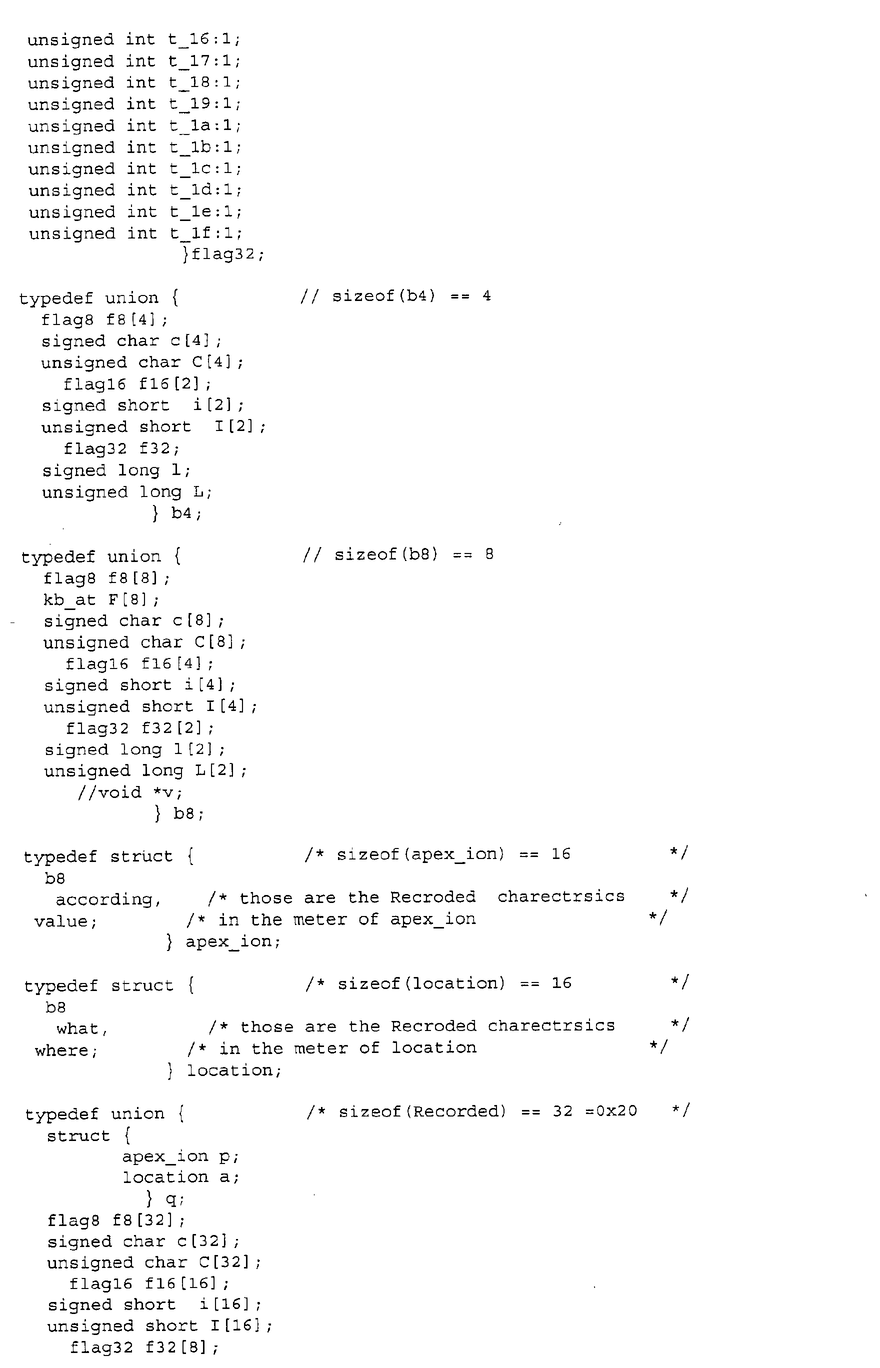

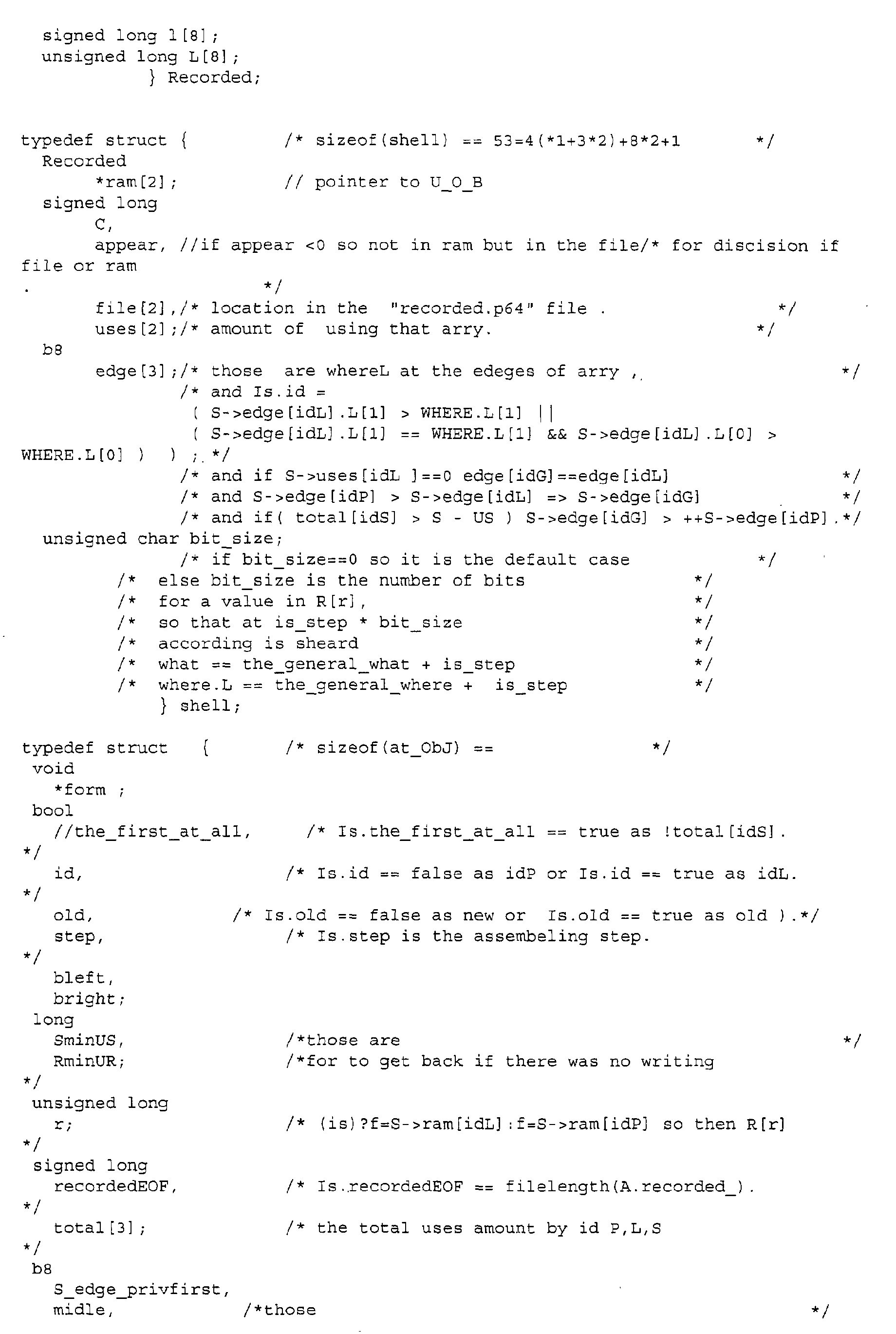

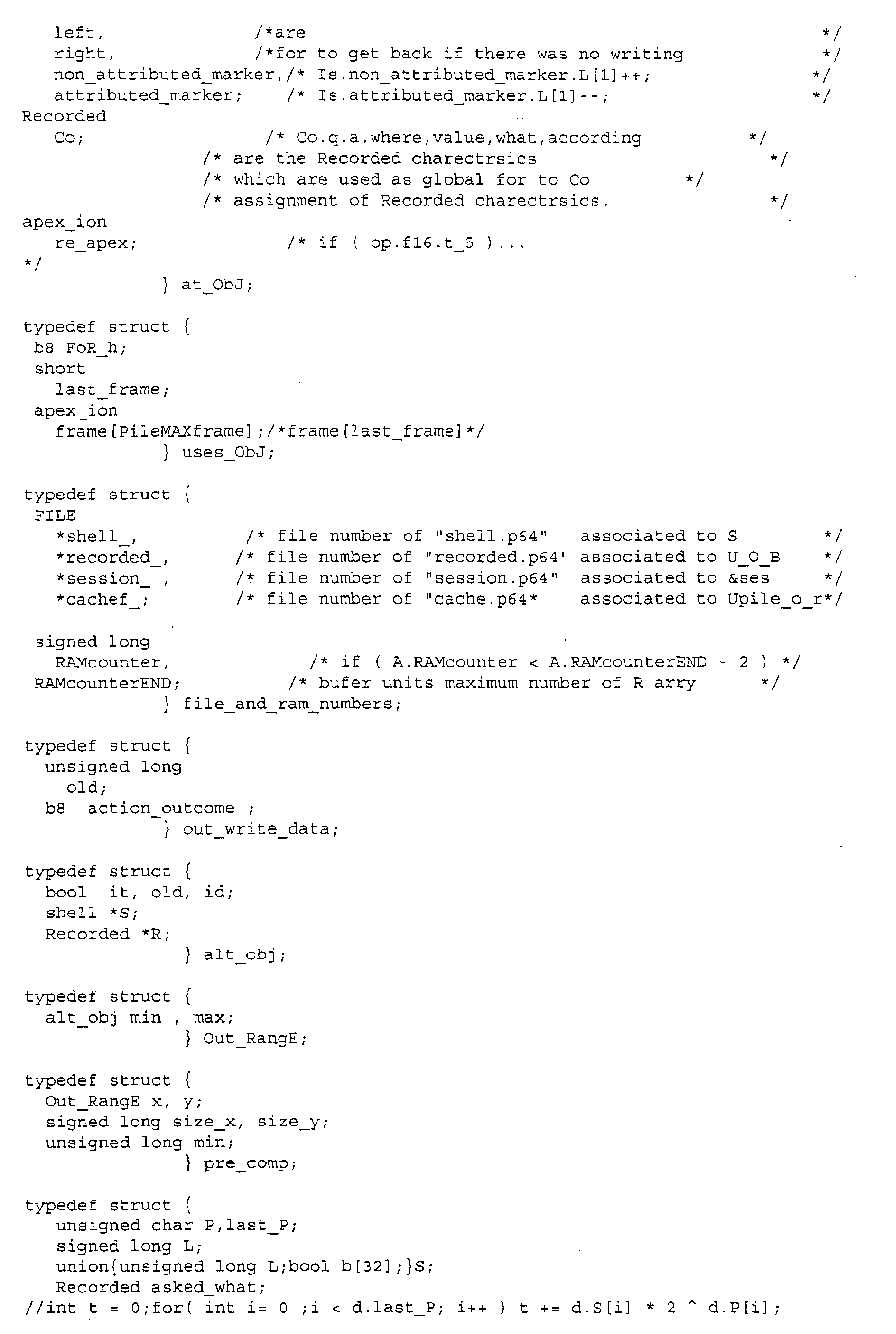

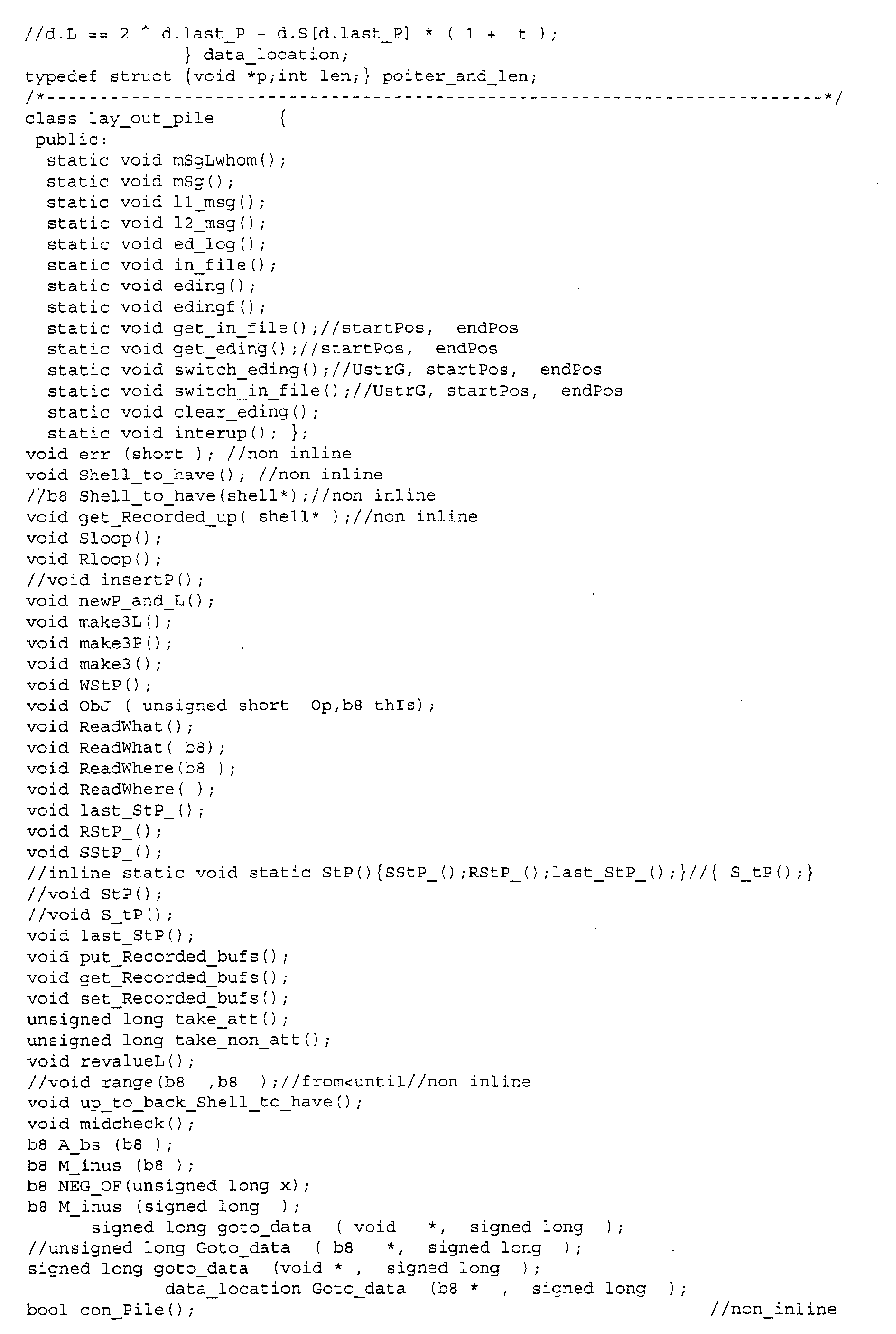

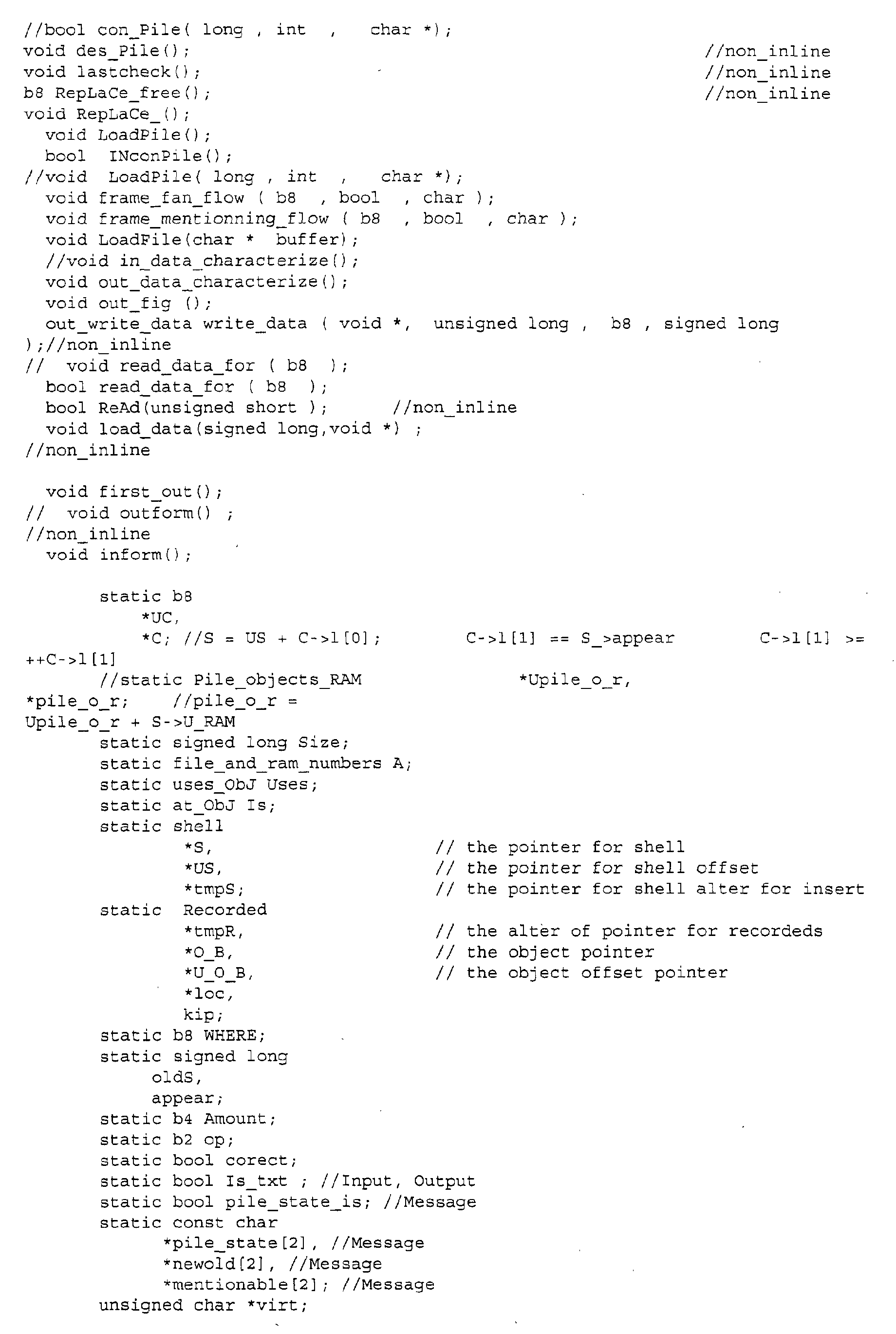

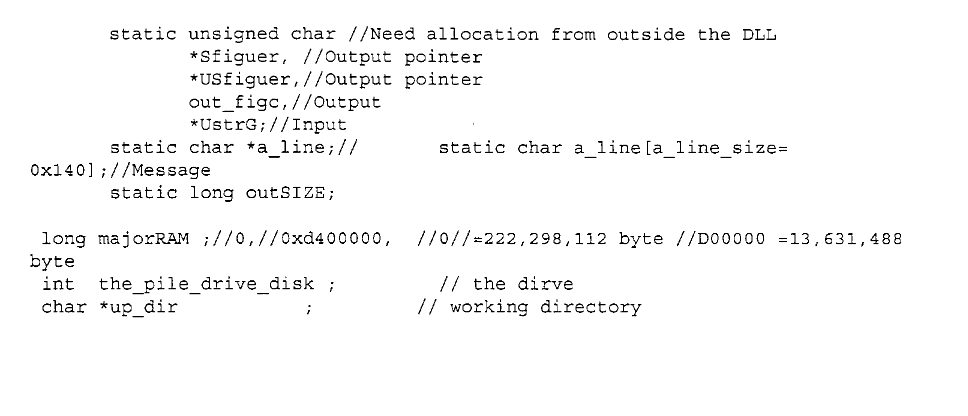

## Claims

1. A method of constructing a structure of objects related by several generic attributes, wherein a first attribute is an object address in said structure; a second attribute relates objects to a 'folder object' having first attribute equivalent; a third attribute is an address of an object related by said second attribute; and when the connection from said 'folder object' to said third attribute is equivalent to a path of several pointers each being a forth attribute, so that any next pointer step is equivalent to a digit location in a number equivalent to said third attribute, and so that the pointing is to the equivalent number of said first attribute less said digit, thus the size of the range of addressed objects pointed by said fourth attribute is equivalent to a defined numerical base.

2. The method of claim 1, wherein the addresses of said third attribute and said first attribute are in separate scales of which the ratio of said third to said first equals one or bigger.

3. The method of claim 2, wherein said ratio is equivalent to the ratio of the number of equivalents of said third attributes being equivalent to the single equivalent of said first attribute, when the complex number one to the power of the inverse of said ratio equals the set of complex numbers of which the number of elements is equivalent to an 'insertion level number' and each element being equivalent to an 'insertion mark' marked by the ordinal number 'insertion ordinal number'.

4. The method of claim 1 in condition of claim 2 and 3, wherein the object address of said third attribute is equivalent to the number equal to ( ('insertion ordinal number' minus one ) multiplied by ( the equivalent number of the size of the scale including said first attribute ) ) plus ( the absolute value of the equivalent number of said object address of said third attribute), when said third attribute equivalent number is equivalent to the complex number equal to said 'insertion mark' multiplied by said absolute value.

5. The method of claim 1 in condition of claim 3, wherein the second attribute relating objects to a 'folder object' constitutes an hierarchical layer of the objects having identical said second attribute and identical said 'insertion ordinal number'.

6. A method of constructing a structure of objects in hierarchical form using the method of claim 1 in the conditions of claim 5 and of said objects having said fourth attribute.

7. A method of insertion into the structure constructed by the method of claim 6, using the method of claim 1, in the condition of claim 5, with different 'insertion ordinal number', by the order of said 'insertion ordinal number' as an ordinal number corresponding to precedence of objects located in the object address conditioned by claim 4.

8. A method of constructing a structure of objects in different hierarchical form than, yet coexisting with, the hierarchical form constructed by the methods of claim 6 and 7, so that an 'alternative folder object' has said first attribute equivalent number equal to the absolute value of the number equivalent to said third attribute of objects being a layer of said different hierarchical form of said objects next to said 'alternative folder object'.

9. A method to mark the number equivalent to said first attribute, indicating whether or not said attribute is of the object included in the hierarchical form constructed by the method of claim 8.

10. A method to construct a structure of objects constructed by the method of claim 8, distinguished by claim 9 from, and coexisting with, objects which are in a state of being input to, or being output of, or being not connected with, said structure.

11. A method using precedence over said 'folder object' of said hierarchical form constructed by the methods of claim 6 or 7, of objects marked by the method of claim 9, indicating to be in the hierarchical form constructed by the method of claim 8, of which said 'insertion ordinal number' is bigger than one and of which said second attribute is equivalent to said first attribute of said 'folder object'.

12. A method to evaluate objects constructed by the methods of claims 8 and 6 or 7, using the precedence defined by the conditions of claim 11.

13. A method to connect objects constructed by the method of claim 1 to said objects having an identical said second attribute, when different connected said objects having said fourth attribute identical to said fourth attribute of said 'folder object'.

14. Methods using the method of claim 1 in the condition of claim 2, using additional generic attribute/s alternatively or together with one or more of the four generic said attributes, to insert other than, or additional to, the connections corresponding to the use of the four generic said attributes.

15. A method to construct a type of next orders of activities, when an object constructed by the method of claim 1 is an object of connection/s of said objects, when said connection/s are of at least one of the claims 14,13,12,8,6 and 1, and when said object, its said attributes and said connection/s are of the type of the next orders of activities, when insertion of said next order is an insertion into interrupted continuous activity being the previous order, when the first order is a continuous activity of an order empty of activities, when every insertion interrupting continuous activity creates the next, new higher order, when any order is a connection which enables unique identification of all of its objects, when any continuous activity is a method of accessing said object/s of said order, and when interrupting said continuous activity is a method/s of accessing other than said object/s.

16. A method of a system of constructing or connecting objects having the same lifetime in different scopes of order of claim 15.

17. A method allowing to specify regions of forms of constructing one or more structures of objects constructed by the method of claim 1 having all or part invention attributes being identical, with each region being out of all the other said regions.

18. A method allowing to exchange arguments of attributes of regions of forms specified in claim 17, with said arguments functioning also in different said lifetime.
